# FASCICULE DE BREVET EUROPEEN

(11) **EP 0 995 161 B1**
(45) Date de publication et mention de la délivrance du brevet: **30.01.2002**
(21) Numéro de dépôt: 98936463.3
(22) Date de dépôt: 07.07.1998
(51) Int. Cl.: G06F 17/60, G07G 1/00

(54) **DISPOSITIF, PROCEDE ET SYSTEME INFORMATIQUE D'ENCAISSEMENT POUR DELIVRER AUTOMATIQUEMENT DES BILLETS D'AVANTAGES COMMERCIAUX**
KASSIERVORRICHTUNG, -VERFAHREN UND -RECHNERSYSTEM ZUR AUTOMATISCHEN AUSGABE VON KOMMERZIELLEN RABATTMARKEN
DEVICE, METHOD AND COMPUTERIZED CASHING SYSTEM FOR AUTOMATIC DELIVERY OF DISCOUNT COUPONS

(30) Priorité: 09.07.1997 FR 9708712
(43) Date de publication de la demande: 26.04.2000
(73) Titulaire: Infomil, 31100 Toulouse (FR)
(72) Inventeur: POINTEAU, Marcel, F-31400 Toulouse (FR); DARGELOS, Denis, F-31270 Cugnaux (FR); CAZALBOU, Jean-Claude, F-31100 Toulouse (FR); BARTEAU, Jean-François, 44360 Saint Etienne de Montluc (FR)
(74) Mandataire: Cabinet BARRE LAFORGUE & associés
(86) Numéro de dépôt international: FR9801456
(87) Numéro de publication internationale: WO9903051

(56) Documents cités:
- EP-A- 0 567 291
- WO-A-88/05578
- WO-A-92/14213
- WO-A-96/32683
- WO-A-97/20279
- GB-A- 2 163 581
- GB-A- 2 278 479
- GB-A- 2 306 740
- US-A- 5 353 218
- US-A- 5 537 314

## Description

L'invention concerne un dispositif et un procédé pour délivrer automatiquement des billets d'avantages commerciaux lors du passage des clients à la (aux) caisse(s) d'un magasin pour l'enregistrement et le règlement d'un achat d'articles. L'invention concerne aussi un système informatique d'encaissement de magasin équipé d'un tel dispositif.

EP-A-0 512 509 décrit un dispositif permettant d'imprimer automatiquement des bons de réduction aux caisses de sortie de magasins selon des conditions remplies par les clients. Ce dispositif nécessite pour son fonctionnement :
- l'implantation dans chaque magasin d'un réseau d'imprimantes spécifiques reliées à un ordinateur spécifique lui-même connecté sur le réseau des terminaux de caisses de sortie, cet ordinateur incluant un fichier d'achats des clients et une base de données dans laquelle les termes des bons de réduction sont stockés,
- la connexion dé l'ordinateur spécifique à un ordinateur hôte distant ayant une base de données centralisée contenant les différents fichiers de chaque magasin,
- l'insertion dans le fichier d'articles de chaque magasin d'un champ déclenchant sur un bit supplémentaire.

Ce dispositif est donc complexe et coûteux. Son installation est longue et suppose des modifications, non seulement sur le matériel et les logiciels, mais aussi sur toutes les données du magasin.

En outre, ce dispositif géré et mis à jour par un ordinateur hôte distant fait perdre le contrôle du fonctionnement par le magasin et n'est donc pas envisageable pour les magasins entièrement autonomes du point de vue de leur gestion (non dépendants d'une chaîne de magasins). Il ne permet en particulier pas au magasin d'allouer des avantages commerciaux qui lui sont spécifiques, ni de modifier, à tout moment, les conditions d'attribution de ces avantages commerciaux.

Par ailleurs, ce dispositif ne permet de délivrer que des bons de réduction selon des conditions présélectionnées relatives au client et/ou selon la présence de produits déclenchants prédéterminés dans l'achat d'articles du client. Il est donc limité dans ses applications et ne permet notamment pas :
- de délivrer et de gérer des billets d'avantages commerciaux autres que des bons de réduction (bons d'achat valables sur tout ou partie du magasin, points de fidélité, bons d'attribution de cadeaux, messages commerciaux...),
- de délivrer des billets d'avantages commerciaux selon d'autres critères d'attribution que la présence d'un article dans l'achat ou des données sur les clients porteurs de cartes de crédits délivrées par le magasin,
- au magasin de définir lui-même, à tout moment, les conditions d'attribution et/ou la valeur et/ou le libellé et/ou les conditions de validité et de remboursement, des billets d'avantages commerciaux.

L'invention vise à pallier ces inconvénients en proposant un dispositif et un procédé plus performants que les systèmes antérieurs, pouvant être entièrement gérés et mis à jour par le magasin lui-même, simples et économiques à installer et à utiliser, notamment sans nécessiter d'appareillages supplémentaires ni une nouvelle saisie ou une modification complète des données du magasin.

L'invention vise ainsi à proposer un dispositif et un procédé pour délivrer automatiquement des billets d'avantages commerciaux qui tout à la fois présentent des performances accrues en ce qui conceme les caractéristiques des différents billets délivrés, leurs conditions d'attribution, et les configurations et options à la disposition des magasins, et puissent s'intégrer de façon simple et économique dans la plupart des systèmes informatiques d'encaissement des magasins.

Dans tout le présent texte, on adopte la terminologie suivante :
- avantage commercial : tout avantage tel qu'un bon à utilisation différée -notamment bon d'achat, point de fidélité, bon d'attribution de cadeaux, bon ouvrant droit à participer à un jeu ou à une loterie, ou même message d'information commerciale, ...- pouvant être alloué à un client d'un magasin, et qui permet d'influencer sur le comportement commercial futur de ce client,
- billet, ou billet d'avantage commercial : tout support pouvant être délivré à un client et ensuite emporté par le client, et grâce auquel le client peut être informé sur les caractéristiques d'un avantage commercial correspondant qui lui est attribué,
- valeur d'avantage commercial : toute valeur numérique incorporée dans un avantage commercial et représentant quantitativement au moins partiellement cet avantage commercial (montant du bon en unités monétaires, en pourcentage sur un montant d'achat, en quantité de produits allouée, nombre de points,...) ; il est à noter que l'invention s'applique aussi à la délivrance de billets d'avantages commerciaux sans valeur (par exemple des messages publicitaires),
- délivrer automatiquement des billets : fournir des billets sans nécessiter d'intervention ou d'action du personnel du magasin, notamment de la caissière ; par contre, une intervention ou action du client lui-même peut être exigée, même si cela n'est généralement pas le cas,
- achats d'articles : toute transaction entre un client et un magasin, en caisse, pour l'achat d'au moins un article et se terminant par un règlement (paiement) du client,
- groupe d'articles : tout ensemble d'article(s) prédéfini de façon permanente dans le magasin (par exemple : chaque article ; chaque sous-famille d'articles ; chaque famille d'articles ; chaque rayon d'articles ; tous les articles du magasin), ou défini de façon provisoire (tous les articles d'un achat ; tous les articles d'un fournisseur ; tous les articles bénéficiant d'une promotion et/ou figurant sur un prospectus publicitaire...),
- carte : toute carte contenant des informations sur l'identité d'un client présentée lors d'un règlement ; il peut ainsi s'agir de cartes utilisées pour le règlement (cartes bancaires, cartes de crédit...) ou non (cartes de fidélité émises par le magasin...), et de cartes à lecture et saisie automatiques (magnétique, électronique, optique...) ou manuelles,
- ticket : un ticket de caisse imprimé lors du passage en caisse et destiné à être laissé au client, à titre notamment de justificatif d'achat, répertoriant les articles d'un achat et leur prix, ainsi que le montant de l'achat.

L'invention concerne donc un dispositif pour délivrer automatiquement des billets d'avantages commerciaux lors du passage des clients à la (aux) caisse(s) d'un magasin pour l'enregistrement et le règlement d'un achat d'articles, comprenant au moins un système informatique, dit serveur de contrôle, de contrôle d'au moins une caisse,
caractérisé en ce qu'il comprend en commun pour toutes les caisses du magasin :
- au moins un fichier TYPES DE BILLETS de définition des différents types de billets pouvant être délivrés par chaque caisse, dans lequel sont enregistrées des informations définissant les caractéristiques communes aux billets indépendamment de leur valeur d'avantage commercial et des conditions d'attribution présidant à leur délivrance en caisse,
- au moins un fichier CRITERES, distinct d'un fichier TYPES DE BILLETS, dans lequel sont enregistrés, pour chaque type de billets du (des) fichier(s) TYPES DE BILLETS des enregistrements contenant chacun :
   . des informations relatives aux conditions d'attribution présidant à la délivrance de chaque billet de ce type, et portant sur l'achat d'articles effectué par un client lors de son passage en caisse et/ou sur l'identité du client et/ou sur la date de l'achat et/ou sur l'heure de l'achat,
   . et/ou des informations permettant de déterminer la valeur d'avantage commercial de billets de ce type,
- des moyens de saisie et/ou de mise à jour dans le magasin, pour chaque serveur de contrôle, des informations enregistrées dans les fichiers TYPES DE BILLETS et CRITERES,
   et en ce que chaque serveur de contrôle est programmé pour :

- permettre l'enregistrement des articles correspondant à un achat puis le règlement du montant correspondant par le client, et l'enregistrernent de ce règlement,
- après l'enregistrement du règlement, et pour chaque type de billets pouvant être délivré par la caisse correspondante :
   . comparer les informations relatives à l'achat d'articles effectué, avec les conditions d'attribution portant sur l'achat d'articles effectué enregistrées dans le (les) fichier(s) CRITERES, puis, si les conditions d'attribution portant sur l'achat d'articles effectué sont satisfaites, composer le billet à partir des informations des fichiers TYPES DE BILLETS et CRITERES et des informations enregistrées lors de l'achat sur les articles de l'achat, et notamment déterminer la valeur d'avantage commercial correspondante,
   . et/ou comparer les informations relatives à l'identité du client éventuellement enregistrées lors du règlement, avec les conditions d'attribution portant sur l'identité du client enregistrées dans le(s) fichier(s) CRITERES, puis, si les conditions d'attribution portant sur l'identité du client sont satisfaites, composer le billet à partir des informations des fichiers TYPES DE BILLETS et CRITERES et des informations enregistrées lors de l'achat sur l'identité du client, et notamment déterminer la valeur d'avantage commercial correspondante,
- puis délivrer le (les) billet(s) attribué(s) au client.

Avantageusement et selon l'invention, au moins un -notamment un et un seul- fichier TYPES DE BILLETS est enregistré sur la mémoire de masse d'au moins un serveur de contrôle.

Avantageusement et selon l'invention, il est prévu au moins un fichier CRITERES, dit fichier CRITERES/TICKETS, définissant des conditions d'attribution portant sur l'achat d'articles effectué par le client. En outre, avantageusement et selon l'invention, il est prévu au moins un fichier CRITERES, dit fichier CRITERES/CLIENTS, définissant des conditions d'attribution portant sur l'identité de client(s).

Avantageusement et selon l'invention, au moins un -notamment un et un seul- fichier CRITERES/TICKETS est enregistré sur la mémoire de masse d'au moins un serveur de contrôle. De même, avantageusement et selon l'invention, au moins un -notamment un et un seul- fichier CRITERES/CLIENTS est enregistré sur la mémoire de masse d'au moins un serveur de contrôle.

L'invention s'étend aussi à un système informatique d'encaissement de magasin comprenant au moins une caisse pour l'enregistrement et le règlement des achats d'articles et au moins un système informatique, dit serveur de contrôle, de contrôle d'au moins une caisse, caractérisé en ce qu'il comprend un dispositif selon l'invention.

L'invention s'étend également au procédé mis en oeuvre par un dispositif selon l'invention. L'invention concerne donc un procédé pour délivrer automatiquement des billets d'avantages commerciaux lors du passage des clients à la (aux) caisse(s) d'un magasin pour l'enregistrement et le règlement d'un achat d'articles, ce magasin comprenant au moins un système informatique serveur, dit serveur de contrôle, de contrôle d'au moins une caisse, caractérisé en ce qu'on enregistre et on met à jour, dans le magasin, pour chaque serveur de contrôle, et en commun pour toutes les caisses du magasin :
- dans au moins un fichier TYPES DE BILLETS de définition des différents types de billets pouvant être délivrés par chaque caisse, des informations définissant des caractéristiques communes aux billets indépendamment de leur valeur d'avantage commercial et des conditions d'attribution présidant à leur délivrance en caisse,
- dans au moins un fichier CRITERES, distinct d'un fichier TYPES DE BILLETS, pour chaque type de billets du (des) fichier(s) TYPES DE BILLETS au moins un enregistrement contenant :
   . des informations relatives aux conditions d'attribution présidant à la délivrance de chaque billet de ce type, et portant sur l'achat d'articles effectué, et/ou sur l'identité du client, et/ou sur la date de l'achat, et/ou sur l'heure de l'achat,
   . et/ou des informations permettant de déterminer la valeur d'avantage commercial de billets de ce type,
      et en ce que, chaque serveur de contrôle étant programmé pour permettre l'enregistrement des articles correspondant à un achat puis le règlement du montant correspondant par le client et l'enregistrement de ce règlement, après l'enregistrement du règlement, et pour chaque type de billets pouvant être délivré par la caisse correspondante :

   . on compare les informations relatives à l'achat d'articles effectué, avec les conditions d'attribution portant sur l'achat d'articles effectué enregistrées dans le (les) fichier(s) CRITERES, puis, si les conditions d'attribution portant sur l'achat d'articles effectué sont satisfaites, on compose le billet à partir des informations des fichiers TYPES DE BILLETS et CRITERES et des informations enregistrées lors de l'achat sur les articles de l'achat, et notamment on détermine la valeur d'avantage commercial correspondante,
   . et/ou on compare les informations relatives à l'identité du client éventuellement enregistrées lors du règlement, avec les conditions d'attribution portant sur l'identité du client enregistrées dans le(s) fichier(s) CRITERES, puis, si les conditions d'attribution portant sur l'identité du client sont satisfaites, on compose le billet à partir des informations des fichiers TYPES DE BILLETS et CRITERES et des informations enregistrées lors de l'achat sur l'identité du client, et notamment on détermine la valeur d'avantage commercial correspondante,
- puis on délivre le (les) billet(s) attribué(s) au client.

Il est à noter que le dispositif et le procédé selon l'invention sont entièrement intégrés dans un système d'encaissement de magasin par programmation additionnelle dans le logiciel des serveurs de contrôle gérant les caisses, et adjonction de fichiers spécifiques simples, sans nécessiter de modifications sur les données pré-existantes, notamment sur les fichiers d'articles.

D'autres buts, caractéristiques et avantages de l'invention apparaîtront à la lecture de la description suivante qui se réfère aux figures annexées dans lesquelles :
- la figure 1 est un schéma général d'un mode de réalisation d'un système informatique d'encaissement de magasin selon l'invention comprenant un dispositif selon l'invention,
- la figure 2 est un organigramme schématique illustrant les principales étapes d'un mode de réalisation d'un procédé selon l'invention,
- la figure 3 est un organigramme schématique illustrant les principales étapes d'un procédé mis en oeuvre pour prendre en compte un règlement effectué au moins partiellement avec un billet d'avantage commercial du type pouvant être utilisé à titre de paiement, précédemment délivré par un dispositif selon l'invention.

Le dispositif selon l'invention s'intègre dans un système informatique d'encaissement de magasins, de type traditionnel, tel que le système d'encaissement EVOLUTEL de la société Infomil (France).

Le dispositif selon l'invention consiste en effet essentiellement en l'adjonction de fichiers de données, et d'une programmation appropriée du système informatique d'encaissement.

Il est à noter en outre que l'invention s'applique à d'autres systèmes d'encaissement que le système EVOLUTEL.

Les systèmes informatiques d'encaissement pour magasins comprennent au moins un système informatique, dit serveur de contrôle 1, 2. Chaque serveur de contrôle 1, 2 est relié à au moins une caisse 3 dont il contrôle le fonctionnement. En effet, une caisse 3 est essentiellement constituée, du point de vue de son fonctionnement informatique, d'une carte logique vue comme un terminal périphérique par le serveur de contrôle 1, 2 auquel elle est reliée. Une caisse 3 est donc formée en pratique d'une carte logique reliée au serveur de contrôle 1, 2 par une liaison série, par exemple RS 232, et d'une pluralité de périphériques reliés à cette carte logique, à savoir: un interface caissière (clavier et affichage) ; un affichage destiné au client ; un dispositif lecteur optique de codes à barres ; des moyens de traitement des chèques (lecteur et imprimante) ; un terminal de paiement électronique par carte bancaire avec un clavier de saisie des codes confidentiels ; une imprimante de tickets de caisse...

Chaque caisse 3 transmet donc des données au serveur de contrôle 1, 2 associé, notamment des données relatives aux différents articles achetés et au règlement effectué, et reçoit des données de la part du serveur de contrôle 1, 2, notamment les différentes données nécessaires à la réalisation du ticket (prix des articles, date, T.V.A., montant total, ...) et dés signaux et données pour le règlement des achats (acceptation d'un mode de règlement, données imprimées sur un chèque ou récépissé de carte bancaire...).

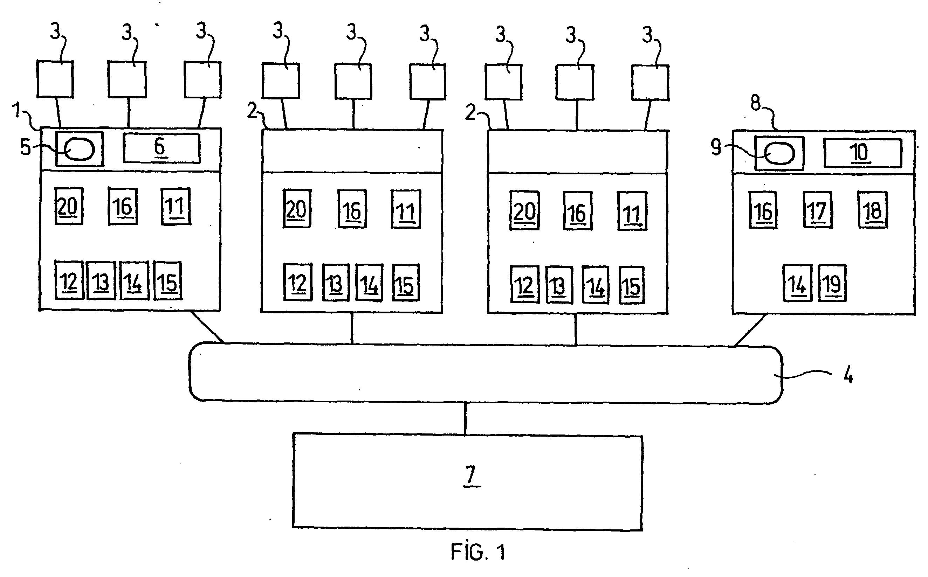

Un système d'encaissement traditionnel peut comporter un seul serveur de contrôle auquel sont connectées plusieurs caisses 3 en boucle ou en étoile, ou dans les cas les plus courants, et de préférence, un réseau de serveur de contrôle relié les uns aux autres par un bus 4 de réseau. Dans l'exemple représenté par figure 1, le système informatique d'encaissement comprend trois serveurs de contrôle 1, 2, et, reliés à chacun d'entre eux, trois caisses 3.

Chaque serveur de contrôle 1, 2 est essentiellement constitué d'une unité centrale de micro-ordinateur traditionnelle, comprenant au moins une carte mère à microprocesseur, des mémoires vives et mortes, une mémoire de masse, et les différentes cartes d'interface nécessaires à son fonctionnement et à sa connexion au réseau 4 et aux différentes caisses 3 associées. Les différents serveurs de contrôle 1, 2 sont semblables, c'est-à-dire sont adaptés pour effectuer les mêmes fonctions vis-à-vis des caisses 3 et fonctionner sur le réseau commun 4. En particulier, ils sont programmés de la même façon, c'est-à-dire que les mêmes programmes sont chargés et activés sur les différents serveurs de contrôle 1, 2. De même, les différents serveurs de contrôle 1, 2 partagent les mêmes fichiers de données communes qui peuvent être enregistrés soit sur l'un des serveurs de contrôle 1, 2, (et accédés par les différents serveurs de contrôle 1, 2 via le réseau), soit, de préférence, dupliqués sur les mémoires de masse de chacun des serveurs de contrôle 1, 2. Chaque serveur de contrôle 1,2 peut néanmoins aussi contenir des données et/ou fichiers qui lui sont propres, notamment en ce qui concerne les statistiques de fonctionnement de chacune des caisses 3 qui lui est associée.

Néanmoins, l'un 1 des serveurs de contrôle 1, 2 généralement dénommé concentrateur, est programmé pour gérer l'ensemble du réseau, et notamment pour dupliquer les différentes informations et données sur les différents serveurs de contrôle, 1, 2, à l'identique et en temps réel. En outre, le serveur de contrôle 1 concentrateur présente un interface utilisateur sous la forme d'un clavier 5 et d'un écran 6, alors qu'en général les autres serveurs de contrôie 2, gérés en esclave via le réseau 4 par le concentrateur 1, ne comportent pas d'écran ni de clavier.

Par ailleurs, le bus de réseau 4 est également relié en général à un système informatique 7 de gestion commerciale et de comptabilité du magasin qui reçoit les données concernant les différentes ventes réalisées qui lui sont fournies par les différents serveurs de contrôle 1, 2, et émet sur le réseau 4 des informations commerciales et comptables issues du magasin, notamment un fichier ARTICLES 20 dupliqué sur chaque serveur de contrôle 1, 2, contenant les informations concernant les différents articles (codes, prix...), des informations concernant des remises à appliquer, ....

En outre, le système informatique d'encaissement comprend en général également un système informatique serveur 8 supplémentaire, dit serveur CLIENTS 8, connecté sur le bus 4 de réseau des serveurs de contrôle 1, 2, et permettant d'effectuer des opérations de gestion spécifiques qui ne concernent pas directement le fonctionnement des caisses 3. Aucune caisse 3 n'est reliée à ce serveur CLIENTS 8. Ce serveur CLIENTS 8 est également constitué d'un micro-ordinateur, avec un clavier 9 et un écran 10, et permet par exemple d'émettre en temps réel, et de gérer les cartes présentées par les clients pour les règlements et d'effectuer des programmes de sélection de données, notamment de sélection de clients, destinés à des opérations commerciales ou de mercatique.

Le logiciel de gestion des caisses 3 de chaque serveur de contrôle 1, 2 permet en particulier de créer et de mettre à jour un fichier LOG 11 propre à chaque serveur de contrôle 1, 2, qui recense tous les événements intervenant sur les caisses 3 qui lui sont associées, et notamment les données relatives aux différents tickets de caisse imprimés (numéro de ticket de caisse, numéro de caisse, numéro de caissière, codes et prix des articles achetés, date et heure...).

La structure générale et le fonctionnement décrits ci-dessus d'un système d'encaissement de magasins sont connus en eux-mêmes et l'ensemble des autres caractéristiques de détail d'un tel système d'encaissement non décrites ci-dessus, sont incorporées à la présente description par référence, notamment les caractéristiques connues des systèmes d'encaissement EVOLUTEL de la société Infomil (France).

L'invention consiste, dans un tel système d'encaissement, à adjoindre des fichiers particuliers et à rajouter des modules de programmes spécifiques permettant de délivrer automatiquement des billets d'avantages commerciaux lors du passage des clients aux caisses 3 du magasin pour l'enregistrement et le règlement de leurs achats d'articles.

Le dispositif selon l'invention comprend en commun pour toutes les caisses du magasin:
- au moins un fichier TYPES DE BILLETS 12 de définition des différents types de billets pouvant être délivrés par chaque caisse 3, dans lequel sont enregistrées des informations définissant les caractéristiques communes aux billets indépendamment de leur valeur d'avantage commercial et/ou des conditions d'attribution présidant à leur délivrance en caisse,
- au moins un fichier CRITERES 13, 14, distinct du (des) fichier(s) TYPES DE BILLETS, dans lequel est (sont) enregistré(s), pour chaque type de billets du (des) fichier(s) TYPES au moins un (des) enregistrement(s) contenant:
   . des informations relatives aux conditions d'attribution présidant à la délivrance de chaque billet de ce type, et portant sur l'achat d'articles effectué et/ou sur l'identité du client et/ou sur la date de l'achat et/ou sur l'heure de l'achat, et/ou des infonnations permettant de déterminer la valeur d'avantage commercial de billets de ce type,
- des moyens 1, 4, 5, 6 de saisie et/ou de mise à jour dans le magasin, pour chaque serveur de contrôle, des informations enregistrées dans les fichiers TYPES DE BILLETS 12 et CRITERES 13, 14,
   et chaque serveur de contrôle 1, 2 est programmé pour:

- permettre l'enregistrement des articles correspondant à un achat puis le règlement du montant correspondant par le client, et l'enregistrement de ce règlement,
- après l'enregistrement du règlement, et pour chaque type de billets pouvant être délivré par la caisse 3 correspondante:
   . comparer les informations relatives à l'achat d'articles effectué, avec les conditions d'attribution portant sur l'achat d'articles effectué enregistrées dans le (les) fichier(s) CRITERES 13, 14, puis, si les conditions d'attribution portant sur l'achat d'articles effectué sont satisfaites, composer le billet à partir des informations des fichiers TYPES DE BILLETS 12 et CRITERES 13, 14 et des informations enregistrées lors de l'achat sur les articles de l'achat, et notamment déterminer la valeur d'avantage commercial correspondante.
   . et/ou comparer les informations relatives à l'identité du client éventuellement enregistrées lors du règlement, avec les conditions d'attribution portant sur l'identité du client enregistrées dans le(s) fichier(s) CRITERES 13, 14, puis, si les conditions d'attribution portant sur l'identité du client sont satisfaites, composer le billet à partir des informations des fichiers TYPES DE BILLETS 12 et CRITERES 13, 14 et des informations enregistrées lors de l'achat sur l'identité du client, et notamment déterminer la valeur d'avantage commercial correspondante,
- puis délivrer le (les) billet(s) attribué(s) au client.

Dans le mode de réalisation représenté et selon l'invention, le dispositif comprend un même fichier TYPE DE BILLETS 12 dupliqué sur les mémoires de masse des différents serveurs de contrôle 1, 2 via le réseau 4 par le serveur de contrôle 1 concentrateur. Le fichier TYPE DE BILLETS 12 comprend, pour chaque type de billets à définir, un enregistrement définissant les informations communes à ce type de billets. Les champs successifs de chaque enregistrement du fichier TYPE DE BILLETS 12 peuvent être par exemple les suivants :
- numéro du type de billets,
- nom du type de billets,
- indication du fait que ce type de billets peut être attribué à tous les clients du magasin ; ou uniquement aux clients porteurs d'une carte de fidélité du magasin ; ou uniquement aux clients non porteurs d'une carte de fidélité du magasin,
- mode d'impression des billets de ce type choisi parmi : une impression par l'imprimante de tickets de caisse, à la suite du ticket de caisse, sans séparation du billet et du ticket de caisse ; une impression par l'imprimante de tickets de caisse après le ticket de caisse avec séparation du billet du ticket de caisse ; une impression par une imprimante distincte de l'imprimante du ticket de caisse mais localisée auprès de la caisse 3 correspondante, et de préférence connectée à cette caisse 3,
- texte d'informations destinées aux clients concernant l'avantage commercial correspondant, avec, dans ce texte s'il y a lieu (c'est-à-dire si l'avantage commercial a une valeur), un symbole représentatif de la valeur de l'avantage commercial (par exemple le signe $),
- un champ définissant une liste de caisses 3 auquel la délivrance de billets de ce type est autorisée,
- une unité dans laquelle la valeur d'avantage commercial du billet est exprimée, s'il y a lieu,
- indication du fait qu'un code à barres représentatif du billet est imprimé ou non avec le billet,
- indication du fait que le billet est actif ou inactif,
- un champ permettant de définir les dates et heures de validité d'un billet délivré de ce type,
- un champ permettant de définir si un billet de ce type peut être ou non utilisé à titre de règlement lors d'un achat ultérieur,
- un champ permettant de définir un groupe d'articles devant être présent ou absent dans un achat ultérieur d'articles pour autoriser l'utilisation d'un billet délivré de ce type à titre de règlement de cet achat ultérieur.

Les trois demiers champs sus-indiqués sont des champs utilisés lors de l'utilisation ultérieure du billet par le client, dans le cas où le billet définit un avantage commercial différé. Au contraire, les autres champs de l'enregistrement décrits ci-dessus comprennent des données relatives à fémission des billets de ce type. Il est à noter que, parmi ces champs, certains incorporent des informations relatives à des conditions d'attribution des billets de ce type (clients bénéficiaires, caisses pouvant délivrer de tels billets, actif/inactif). Mais ces informations sont communes à tous les billets du même type et les champs de l'enregistrement du fichier TYPE DE BILLETS 12 comprennent certaines informations qui sont indépendantes de la valeur d'avantage commercial et des conditions d'attribution des billets (numéro et nom du type de billets, type d'impression, texte composant le billet, unité de la valeur du billet, présence ou non d'un code à barres).

Chaque serveur de contrôle 1, 2 est programmé pour déterminer, après un achat par un client à une caisse 3, les types de billets attribuables à cette caisse 3, puis si les conditions d'attribution sont satisfaites, composer et délivrer le(s) billet(s) attribué(s) au client. En outre, chaque serveur de contrôle 1, 2 est programmé pour remplacer ledit symbole représentatif ($) de la valeur de l'avantage commercial, dans le texte de l'enregistrement du fichier TYPE DE BILLETS 12, par la valeur calculée d'avantage commercial, avant de délivrer un billet de ce type. Cette valeur est calculée par le serveur de contrôle 1, 2 en fonction des informations permettant de d'éterminer la valeur d'avantage commercial du billet de ce type, qui sont enregistrées notamment dans le fichier CRITERES 13, 14 approprié.

Plus particulièrement, pour composer et délivrer un billet attribué au client, chaque serveur de contrôle 1, 2 est programmé pour:
- former à partir des informations des fichiers TYPES DE BILLETS 12 et CRITERES 13, 14, des données représentant un texte incorporant la valeur d'avantage commercial du billet si celle-ci est prévue,
- imprimer ces données par des moyens d'impression localisés auprès de la caisse 3 où le client se situe, et de préférence connectés à cette caisse 3,
- mettre à jour un fichier 11 recensant les billets délivrés, et notamment le fichier LOG 11 du serveur de contrôle 1, 2 correspondant.

Avantageusement et selon l'invention, le dispositif est caractérisé en ce qu'il comprend au moins un fichier CRITERES, dit fichier CRITERES/TICKETS 13, définissant des conditions d'attribution portant sur l'achat d'articles effectué, et au moins un fichier CRITERES 14, dit fichier CRITERES/CLIENTS, définissant des conditions d'attribution portant sur l'identité de client(s).

Dans le mode de réalisation représenté, de préférence et selon l'invention, le dispositif comprend un seul et même fichier CRITERES/TICKETS 13 dupliqué sur les mémoires de masse des différents serveurs de contrôle 1, 2, géré et mis à jour via le réseau 4 par le serveur de contrôle I concentrateur. De même, le dispositif comprend de préférence et selon l'invention, comme représenté, un seul et même fichier CRITERES/CLIENTS 14 dupliqué sur les différents serveurs de contrôle 1, 2. Par contre, ce fichier CRITERES/CLIENTS 14 est de préférence géré et mis à jour en temps réel par le serveur clients 8 qui émet en temps réel ce fichier CRITERES/CLIENTS 14 sur le bus de réseau 4 à destination des différents serveurs de contrôle 1, 2, soit directement, soit par l'intermédiaire du serveur de contrôle 1 concentrateur qui reçoit ce fichier CRITERES/CLIENTS 14 du serveur clients 8 et le transmet aux autres serveurs de contrôle 2.

Ainsi, et selon l'invention, les fichiers TYPES DE BILLETS 12 et CRITERES 13, 14 constituent des fichiers communs dupliqués sur chaque serveur de contrôle 1, 2 via le réseau 4 par le serveur de contrôle 1 concentrateur et/ou par le serveur clients 8.

Le fichier CRITERES/TICKETS 13 comprend, pour chaque type de billets, un ou plusieurs enregistrements définissant des conditions d'attribution et, le cas échéant, des informations pour déterminer la valeur d'avantage commercial correspondante, des billets de ce type. Les champs de chaque enregistrement de ce fichier 13 sont par exemple les suivants :
- numéro du type de billets correspondant,
- catégorie d'un groupe d'article(s) devant être présent ou absent dans l'achat d'articles du client pour déclencher l'attribution de billets de ce type (à savoir s'il s'agit d'un article isolé, d'une sous-famille d'articles, d'une famille d'articles, d'un rayon d'articles, de tous les articles du magasin...),
- un champ identifiant ledit groupe d'article(s) devant être présent ou absent dans l'achat d'articles du client pour déclencher l'attribution de billets de ce type,
- un numéro identifiant cet enregistrement,
- un code identifiant une méthode de calcul applicable pour déterminer les conditions d'attribution devant être satisfaites par ledit groupe d'articles de l'achat identifié précédemment et/ou permettant de calculer la valeur d'avantage commercial de billets de ce type,
- un ensemble de données pouvant être saisies par le magasin pour configurer ladite méthode de calcul et en définir les paramètres,
- les dates et heures de délivrance possibles pour les billets de ce type,
- la formule de calcul de la valeur de billets de ce type, par exemple telle qu'établie par ladite méthode de calcul.

Chaque enregistrement du fichier CRITERES/TICKET 13 définit de façon unique, pour chaque type de billets, un critère (identifié par le numéro d'enregistrement) comprenant ladite méthode de calcul, lesdites données, et ladite formule de calcul.

Par ailleurs, chaque serveur de contrôle 1, 2 comprend également un exemplaire d'un fichier METHODES DE CALCUL 15 dans lequel sont mémorisés les différents algorithmes permettant d'exécuter ces méthodes de calcul applicables aux différents critères. Ce fichier METHODES DE CALCUL 15 est géré et mis à jour par le serveur de contrôle 1 concentrateur et dupliqué via le réseau 4 sur les différents serveurs de contrôle 1, 2.

On donne ci-après différents modes de réalisation possibles de méthodes de calcul pouvant être utilisées avec, pour chacune d'entre elles, un exemple pratique de réalisation et la formule de calcul de la valeur d'avantage commercial. Dans les exemples ci-après, [U] désigne l'unité du type de billets défini dans l'enregistrement correspondant du fichier TYPES DE BILLETS 12, [M] définit la monnaie en cours dans le magasin, et ENT est la fonction partie entière.
. Méthode 1 : "Attribution de z [U] si montant d'un groupe entre x et y [M]"
   Exemple : "Attribution de 15 [U] si le montant ticket dépasse 1000 [M]
   Formule : = z [U]
. Méthode 2 : "Attribution de z [U] tous les y [M] dans un groupe si au moins x [M] ont été achetés dans ce groupe"
   Exemple : "Tous les 50 [M] en Boucherie, attribution de 3 [U] à partir de 100 [M] d'achat en Boucherie"
   Formule : = z . ENT [montant du groupe/y] [U]
. Méthode 3 : "Attribution de z [U] tous les y articles d'un groupe si au moins x articles ont été achetés dans ce groupe"
   Exemple : "Pour toute bouteille de vin achetée, attribution de 0,5 [M] en bon d'achat"
   Formule : = z . ENT [nombre d'articles du groupe/y] [U]
. Méthode 4 : "Attribution de x% [U] du montant total de ce groupe si on a acheté au moins y [M] dans ce groupe"
   Exemple: "Bon d'achat de 10 % en [M] sur tout achat en Micro-Informatique"
   Formule : = x % . montant du groupe [U]
. Méthode 5 : "Attribution de z [U] si on a acheté entre x et y articles dans ce groupe"
   Exemple : "Attribution de 50 [U] si achat de 5 à 10 articles dans le rayon fruits et légumes"
   Formule : = z [U]
. Méthode 6 : "Attribution de z [U] si pas d'achat dans un groupe avec un montant de ticket entre x et y [M]"
   Exemple: "Si pas d'achat dans le rayon 01 avec un ticket d'au moins 500 [M], attribution de 10 points valables dans votre magasin"
   Formule : = z [U]
. Méthode 7 : "Attribution de z [U] si pas d'achat dans un groupe avec un ticket comprenant entre x et y articles"
   Exemple : "Si pas d'achat dans le rayon 01 avec un ticket d'au moins 50 articles, attribution de 10 points valables dans votre magasin"
   Formule : = z [U].

Il est à noter qu'il est possible de définir autant de méthodes de calcul que cela est souhaitable, et il suffit pour cela d'augmenter la taille du fichier METHODES DE CALCUL 15. Lors de chaque modification par l'utilisateur (le magasin) d'un enregistrement du fichier CRITERES/TICKETS 13, le serveur de contrôle 1 concentrateur est programmé pour lire dans le fichier METHODES DE CALCUL 15 un champ définissant la formule de calcul de la valeur, et pour recopier ce champ dans le champ de l'enregistrement correspondant du fichier CRITERES/TICKETS 13.

Le serveur clients 8 comprend un fichier CARTES 16 contenant des informations relatives aux clients et aux cartes présentées par les clients lors des règlements, au moins un fichier TICKETS 17 dans lequel sont enregistrées les informations relatives aux achats antérieurs des clients, et des moyens de calcul et de génération d'au moins un fichier CRITERES/CLIENTS 14 comprenant des informations associant un type de billet à un client à identifier. Ces moyens de calcul et de génération sont constitués d'un ou de programme(s) connu(s) en soi (en eux-mêmes) de sélection de clients, et qui permet, par exemple à partir d'informations relatives à l'identité des clients contenues dans le fichier CARTES 16, et de comportements d'achats antérieurs des clients identifiés par le fichier TICKETS 17 relatifs aux clients porteurs de cartes, d'élaborer un fichier CLIENTS SELECTIONNES 18 comprenant des informations d'identification de clients auxquels des avantages commerciaux particuliers pourront être attribués. A partir de ce fichier CLIENTS SELECTIONNES 18 contenant, pour chaque client sélectionné, l'identité du client et un numéro de carte correspondante, le serveur clients 8 est programmé pour élaborer le fichier CRITERES/CLIENTS 14 en combinant, dans chaque enregistrement de ce fichier, les champs suivants :
- un numéro de type de billets attribué,
- les champs d'identification d'un client provenant du fichier CLIENTS SELECTIONNES 18,
- les date et heure de délivrance possibles des billets de ce type pour ce client,
- un numéro identifiant cet enregistrement,
- la formule de calcul de la valeur d'avantage commercial correspondante.

Chaque enregistrement de ce fichier CRITERES/CLIENTS 14 définit de façon unique, pour chaque type de billets, et chaque client sélectionné, un critère (identifié par le numéro d'enregistrement) comprenant ladite formule de calcul.

Cette programmation peut être extrêmement simple, dès lors que le magasin saisit lui-même le numéro de type de billets et la formule de calcul ou un numéro de formule de calcul permettant de retrouver cette formule de calcul dans un fichier distinct (par exemple le fichier METHODES DE CALCUL 15). Il est également possible de prévoir en variante que chaque enregistrement du fichier CRITERES/CLIENTS 14 comprenne également un champ définissant un numéro de méthode de calcul applicable, de façon similaire au fichier CRITERES/TICKETS 13. De la sorte, un billet de ce type ne pourra être attribué à ce client que si les conditions d'attribution sur le ticket définies par ladite méthode de calcul dans le fichier 15 sont satisfaites et si ce client présente sa carte pour le règlement. Egalement, en variante, il est possible de prévoir dans les enregistrements du fichier CRITERES/CLIENTS 14 un champ supplémentaire permettant de limiter le nombre de fois où le critère correspondant est utilisé pour délivrer un billet de ce type pour chaque client.

Un exemple d'enregistrement du fichier CRITERES/CLIENTS 14 est donc le suivant : type 300/Monsieur Dupont-numéro carte/juillet 1997/10 [U].

Ainsi, avec cet enregistrement Monsieur DUPONT se verra attribuer un billet de type 300 de valeur égale à 10 unités à chaque passage aux caisses du magasin au cours du mois de juillet 1997.

De préférence, le fichier CARTES 16 correspond uniquement aux données relatives aux cartes de fidélité du magasin, c'est-à-dire aux clients ayant choisi de souscrire à une carte de fidélité du magasin. Ce fichier CARTES 16 est adressé en temps réel en permanence par le serveur clients 8 à chacun des serveurs de contrôle 1, 2, via le réseau 4, de même que le fichier CRITERES/CLIENTS 14.

Le fichier TICKETS 17 est par contre établi et/ou mis à jour chaque jour après la fermeture du magasin par le serveur clients 8, à partir des différents fichiers LOG 11 des différents serveurs de contrôle 1, 2. Le serveur clients 8 balaye ces différents fichiers LOG 11 et enregistre dans le fichier TICKETS 17 les données relatives aux achats du jour des clients identifiés dans le fichier CARTES 16.

Chaque fois qu'un billet d'avantage commercial est délivré par un serveur de contrôle 1, 2, des informations correspondantes sont enregistrées dans le fichier LOG 11 du serveur 1, 2 de contrôle.

Ces informations sont les suivantes :
- le numéro identifiant le ticket correspondant à l'achat d'articles effectué,
- les numéros de caisse et de caissière,
- le numéro de type de billets,
- les données de l'enregistrement correspondant du fichier TYPES DE BILLETS 12, à l'exception du champ contenant le texte,
- la valeur totale calculée du billet délivré,
- la date et l'heure auxquelles le billet a été délivré,
- le numéro identifiant le billet.

Le serveur clients 8 balaye, chaque jour après la fermeture du magasin, l'ensemble des fichiers LOG 11 et établit et/ou met à jour un fichier BILLETS 19 dans lequel sont enregistrées les données relatives aux différents billets délivrés par les différents serveurs 1, 2 de contrôle. Dans le fichier BILLETS 19, les enregistrements présentent les champs suivants :
- l'ensemble des champs préalablement décrits concernant les données des billets enregistrés dans le fichier LOG 11, mais avec le champ du numéro de billet placé en tête et le champ du numéro de ticket placé en queue,
- un champ indiquant la date de retour du billet au magasin,
- un champ indiquant le numéro du ticket sur lequel ce billet a été utilisé, notamment à titre de règlement lors de son retour.

Avantageusement et selon l'invention, chaque serveur de contrôle est programmé pour comparer, pour chaque type de billets, les informations relatives à l'achat d'articles effectué aux conditions d'attribution du (des) fichier(s) CRITERES/TICKET 13, et pour comparer ensuite, pour chaque type de billets, les informations relatives à l'identité du client éventuellement enregistrées lors du règlement, avec les informations relatives à l'identité de client(s) du (des) fichier(s) CRITERES/CLIENTS 14, puis lorsqu'un billet attribué selon les conditions d'attribution d'un fichier CRITERES/CLIENTS est du même type qu'un billet attribué selon les conditions d'attribution d'un fichier CRITERES/TICKET 13, additionner les valeurs d'avantage commercial correspondantes pour calculer la valeur totale du billet avant de le délivrer.

L'invention concerne également le procédé mis en oeuvre grâce au dispositif selon l'invention.

En particulier, un procédé selon l'invention comprend avantageusement les caractéristiques suivantes:
- on enregistre des informations relatives à des conditions d'attribution de types de billets comprenant des conditions d'attribution portant sur l'achat d'articles effectué, dans au moins un fichier CRITERES, dit fichier CRITERES/TICKETS 13, et on enregistre des informations relatives à des conditions d'attribution portant sur l'identité de client(s) dans au moins un fichier CRITERES, dit fichier CRITERES/CLIENTS 14,
- on relie par un réseau informatique commun 4, une pluralité de serveurs de contrôle 1,2 associés chacun à au moins une caisse 3, l'un 1 des serveurs de contrôle étant programmé pour gérer et mettre à jour via le réseau 4 des informations communes à tous les serveurs de contrôle 1, 2 -notamment en les dupliquant sur chaque serveur de contrôle 1, 2 via le réseau 4-, ces informations communes comprenant les fichiers TYPES DE BILLETS 12 et CRITERES 13, 14, et au moins un fichier ARTICLES 20 relatif aux articles du magasin,
- à partir d'informations que l'on enregistre relatives aux clients et aux cartes présentées lors des règlements par les clients, et d'informations que l'on enregistre relative aux achats antérieurs des clients, on calcule et on génère au moins un fichier CRITERES/CLIENTS 14 comprenant des informations associant un type de billet à un client identifié,
- on enregistre les informations relatives aux clients et aux cartes présentées par les clients lors des règlements, les informations relatives aux achats antérieurs des clients, et le (les) fichier(s) CRITERES/CLIENTS (14) dans un système informatique, dit serveur CLIENTS 8, connecté sur le réseau 4 des serveurs de contrôle 1, 2,
- on établit et/ou on met à jour, chaque jour après la fermeture du magasin, un fichier TICKETS 17 dans lequel on enregistre les données relatives aux achats du jour des clients identifiés dans un fichier CARTES 16,
- on compare, pour chaque type de billet, les informations relatives à l'achat d'articles effectué aux conditions d'attribution du (des) fichier(s) CRITERES/TICKET 13, et on compare ensuite pour chaque type de billets, les informations relatives à l'identité du client éventuellement enregistrées lors du règlement, avec les informations relatives à l'identité de client(s) du (des) fichier(s) CRITERES/CLIENTS 14, puis lorsqu'un billet attribué selon les conditions d'attribution d'un fichier CRITERES/CLIENTS 14 est du même type qu'un billet attribué selon les conditions d'attribution d'un fichier CRITERES/TICKET 13, on additionne les valeurs d'avantage commercial correspondantes pour calculer la valeur totale du billet avant de le délivrer,
- les caisses 3 étant chacune dotée d'une imprimante de ticket de caisse, pour délivrer un billet, on l'imprime sur une imprimante choisie parmi : l'imprimante de ticket de caisse, le billet étant imprimé à la suite du ticket de caisse sans séparation du billet et du ticket de caisse ; l'imprimante de ticket de caisse, le billet étant imprimé après le ticket de caisse avec séparation du billet et du ticket de caisse ; une imprimante distincte de l'imprimante de ticket de caisse mais localisée auprès de la caisse 3 correspondante, et de préférence connectée à cette caisse 3,
- pour composer et délivrer un billet attribué au client:
   . on forme à partir des informations des fichiers TYPES DE BILLETS 12 et CRITERES 13, 14, des données représentant un texte avec la valeur d'avantage commercial du billet,
   . on imprime ces données par des moyens d'impression localisés auprès de la caisse 3,
   . on met à jour un fichier LOG 11 recensant les billets délivrés.

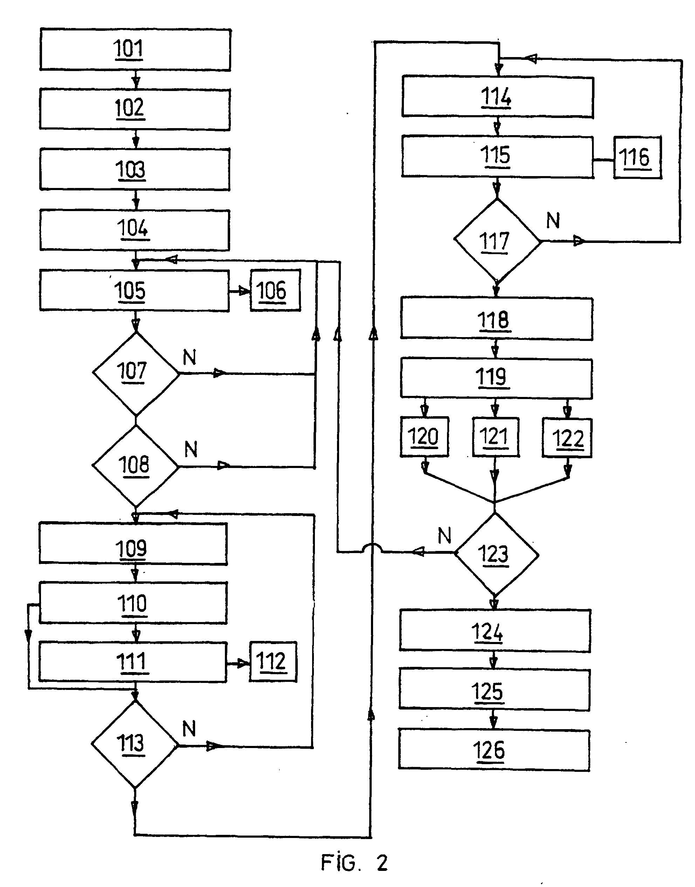

La figure 2 représente un exemple de réalisation de l'ensemble d'un procédé de contrôle d'une caisse 3 par un serveur de contrôle 1,2, selon l'invention.

Lorsqu'elle est inactive, chaque caisse 3 est dans un état d'attente de client représenté par l'étape 101. Lorsqu'un client se présente à la caisse, on effectue de façon traditionnelle l'ensemble des opérations pour l'enregistrement des articles de l'achat correspondant et l'impression du ticket de caisse, au fil de l'eau, lors de l'étape 102. A la suite de cet enregistrement des différents articles achetés, si le client présente une carte, notamment une carte de fidélité et/ou de paiement, on mémorise, lors de l'étape 103, le fait que le client est un porteur de carte du magasin. On effectue ensuite, lors de l'étape 104, toutes les opérations nécessaires au règlement de l'achat correspondant au ticket de caisse préalablement imprimé. Il est à noter que les étapes 101 à 104 sont déjà largement utilisées et connues, et qu'elles n'ont donc pas a être décrites en détail.

Néanmoins, contrairement aux procédés antérieurs connus, le procédé de contrôle de la caisse 3 se poursuit, après le règlement, pour exécuter le procédé selon l'invention. Lors de l'étape 105, on accède séquentiellement aux différents enregistrements du fichier TYPES DE BILLETS 12. Ainsi, on accède tout d'abord au premier enregistrement de ce fichier. A chaque accès à un enregistrement lors de l'étape 105, on effectue simultanément une étape 106 d'initialisation d'un compteur. Après avoir accédé à l'enregistrement d'un type de billets, on examine le champ définissant les clients bénéficiaires (ceux qui sont porteurs de carte et/ou ceux qui ne le sont pas) que l'on compare lors de l'étape 107 à l'information préalablement mémorisée (lors de l'étape 103) concernant le client qui vient d'effectuer l'achat. Si ce type de billet n'est pas applicable au client, on retourne à l'étape 105 pour accéder à l'enregistrement subséquent. Si ce type de billets est applicable au client, on poursuit en examinant lors de l'étape 108 si ce type de billets peut être délivré sur la caisse 3 correspondante, en comparant le numéro de caisse au champ définissant les numéros de caisses où ce type de billets peut être délivré. Si ce type de billets n'est pas applicable à cette caisse 3, on retourne à l'étape 105 pour un accès à l'enregistrement subséquent du ficher TYPE DE BILLET 12. Si au contraire, ce type de billets est aussi applicable à la caisse 3 concernée, on poursuit le procédé.

On accède séquentiellement lors de l'étape 109 suivante, aux enregistrements du fichier CRITERES/TICKETS 13, ayant dans leur premier champ le numéro de type de billets correspondant au type de billets de l'enregistrement accédé à l'étape 105. Ainsi, on accède tout d'abord au premier enregistrement présent dans le fichier CRITERES/TICKETS 13 pour ce type de billet. On compare alors, lors de l'étape 110, les informations relatives aux articles achetés et enregistrées lors de l'étape 102, aux conditions d'attribution portant sur l'achat d'articles effectué résultant de l'application de la méthode de calcul définie dans l'enregistrement du fichier CRITERES/TICKETS 13 et des données également saisies dans cet enregistrement.

Par exemple, dans le cas où le numéro de méthode de calcul de l'enregistrement du fichier CRITERES/TICKETS 13 correspond à la méthode 1 décrite ci-dessus, et dans l'exemple donné ci-dessus, on a mémorisé dans le champ des données, le fait que x = 1 000 et y = 999 999. Lors de l'étape 110, on compare donc le montant total du ticket et on examine s'il dépasse 1 000 [M], c'est-à-dire par exemple, 1 000 francs.

Si ces conditions d'attribution sont satisfaites, on détermine lors de l'étape 111 la valeur d'avantage commercial correspondante en appliquant la formule de calcul de l'enregistrement du fichier CRITERES/TICKETS 13. Dans de nombreux cas, cette formule de calcul se réduit à une simple égalité à une valeur prédéterminée. Dans l'exemple mentionné ci-dessus, cette valeur est de 15. On incrémente alors, lors de l'étape 112, le compteur (initialisé à l'étape 106) de la valeur ainsi calculée. On examine ensuite lors de l'étape 113 s'il existe un autre enregistrement subséquent dans le fichier CRITERES/TICKETS 13 pour le même type de billets. Si tel est le cas, on retourne alors à l'étape 109 pour accéder à cet enregistrement subséquent. Si tel n'est pas le cas, on poursuit le procédé.

Si les conditions d'attribution ne sont pas satisfaites, on passe directement de l'étape 110 à l'étape 113 pour accéder, s'il y a lieu, à un enregistrement subséquent du fichier CRITERES/TICKETS 13.

On accède alors séquentiellement, lors de l'étape 114 suivante, aux enregistrements du fichier CRITERES/CLIENTS 14 pour le type de billets considéré. Ainsi, on accède tout d'abord au premier enregistrement du fichier CRITERES/CLIENTS 14 qui comprend le même numéro de type de billets. On examine alors, lors de l'étape 115, si les informations enregistrées lors de l'achat, notamment lors du règlement et/ou de la présentation de la carte, sur l'identité du client, correspondent aux informations mémorisées dans cet enregistrement du fichier CRITERES/CLIENTS 14. Dans l'affirmative, on applique la formule de calcul de la valeur d'avantage commercial mémorisée dans le dernier champ de cet enregistrement pour déterminer cette valeur. Une fois cette valeur déterminée, on incrémente lors de l'étape 116 le compteur de la valeur correspondante, puis on poursuit le procédé. Dans la négative (cet enregistrement ne correspond pas au client), on poursuit le procédé directement.

On examine ensuite lors de l'étape 117 s'il existe un autre enregistrement subséquent dans le fichier CRITERES/CLIENTS 14 pour le même type de billets. Si tel est le cas, on retourne à l'étape 114 pour accéder à cet enregistrement subséquent. Dans le cas contraire, on poursuit le procédé par l'étape 118 lors de laquelle on compose le billet et on lui attribue un numéro de billet.

Pour composer le billet, on remplace le symbole ($) représentatif de la valeur de l'avantage commercial du texte mémorisé dans l'enregistrement du type de billets par la valeur finale issue du compteur (que l'on a préalablement incrémenté lors des étapes 112 ou 116). On extrait alors l'ensemble du texte ainsi obtenu que l'on enregistre en mémoire.

On attribue également lors de cette même étape 118, un numéro au billet à délivrer. En outre, si l'enregistrement du type de billets détermine la présence d'un code à barres, on élabore et on associe au billet un code à barres représentatif de ce billet, c'est-à-dire de son numéro, et ce de façon connue en soi.

On détermine ensuite lors de l'étape 119 le mode d'impression applicable à ce billet par lecture du champ correspondant de l'enregistrement du fichier TYPE DE BILLET 12. Selon la valeur présente dans ce champ, trois cas sont possibles : soit on imprime, lors de l'étape 120, le billet sur le ticket de caisse, à la suite du ticket de caisse et sans séparation ; soit on imprime lors de l'étape 121 le billet sur une imprimante distincte de l'imprimante de ticket de caisse ; soit on place, lors de l'étape 122, l'ensemble des informations composant le billet en file d'attente pour une impression différée sur l'imprimante de ticket de caisse Après avoir effectué l'une des étapes 120, 121 ou 122, selon le cas, on examine lors de l'étape 123 s'il existe un autre enregistrement pour un autre type de billets dans le fichier TYPES DE BILLETS 12. Si tel est le cas, on retourne à l'étape 105 et on réitère l'ensemble des étapes 105 à 123, pour cet enregistrement subséquent du fichier TYPES DE BILLETS 12. Si tel n'est pas le cas, on poursuit le procédé.

Lors de l'étape 124 suivante, on écrit dans le fichier LOG 11 du serveur de contrôle 1,2 correspondant l'ensemble des informations suivantes : la liste des articles achetés, les différentes actions de la caissière au cours de l'enregistrement des articles et, pour chaque billet délivré, l'ensemble des informations décrites ci-dessus de l'enregistrement du billet (numéro de ticket, numéro de caisse et de caissière, données de l'enregistrement du fichier TYPES DE BILLETS 12 correspondant à l'exception du texte, valeur totale calculée, date et heure numéro de billet).

On procède alors ensuite à la coupure du ticket de caisse lors de l'étape 125, puis on imprime, lors de l'étape 126, l'ensemble des billets et autres informations présents dans la file d'attente de l'imprimante du ticket de caisse, notamment les billets éventuellement placés dans la file d'attente lors de l'étape 122. On replace ensuite la caisse 3 dans l'état d'attente à l'étape 101.

Comme on le voit, le procédé selon l'invention est entièrement intégré dans le procédé de gestion de contrôle des caisses 3, et l'ensemble des étapes permettant de délivrer les billets sont exécutées par le serveur de contrôle 1,2 associé à la caisse 3 correspondante.

En outre, l'exécution du procédé selon l'invention ne nécessite aucune connexion à un ordinateur extérieur au magasin. Il en va de même pour l'installation et/ou de la configuration du dispositif selon l'invention et du système d'encaissement du magasin qui peut ainsi être totalement autonome.

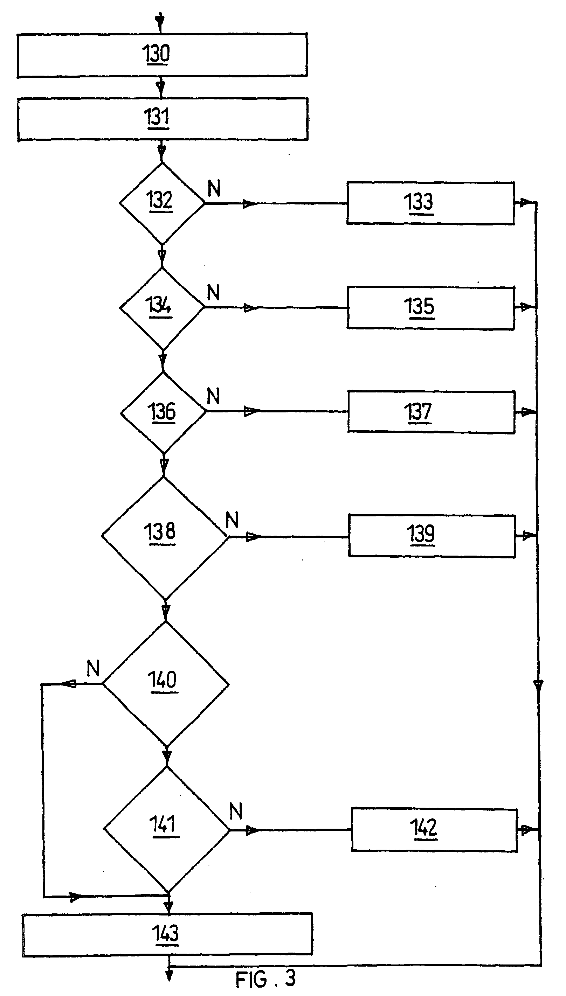

La figure 3 représente le procédé mis en oeuvre lors d'un retour du billet préalablement délivré en vue de son utilisation par un client lors d'un achat ultérieur à titre de bon d'achat.

Ce procédé est donc effectué lors d'une étape de règlement consécutive à l'enregistrement des articles d'un achat telle que l'étape de règlement 104 représentée à la figure 2.

Sur présentation d'un billet par le client, on procède tout d'abord lors de l'étape 130 à la saisie du numéro de billet correspondante, et ce par lecture optique (si le billet est doté d'un code à barres) ou manuel ou de toute autre façon selon le support utilisé pour ce billet.

Il est à noter en effet, que si le procédé représenté figure 2 ne prévoit que des billets imprimés sur papier, toute autre forme de réalisation de billets est possible, et notamment par écriture sur cartes magnétiques et/ou sur cartes à puces électroniques, ... Néanmoins, en tout état de cause, un support apte à fournir une information au client sur la nature du billet délivré doit lui être fournie. Le mode de réalisation représenté figure 2 est le plus avantageux et le plus économique.

Après la saisie du numéro de billet, on accède lors de l'étape 131 aux informations enregistrées dans le fichier BILLETS 19 du serveur client 8. Dans le mode de réalisation de la figure 1, ce fichier BILLETS 19 n'est prévu que sur le serveur client 8. En effet, les accès à ce fichier seront en général peu nombreux. Néanmoins, si nécessaire, il peut être prévu en variante que le fichier BILLETS 19 soit aussi dupliqué sur l'ensemble des serveurs de contrôle 1,2, via le réseau 4, et ce pour accélérer les temps de traitements.

On examine alors lors de l'étape 132 suivante, si le billet présenté est présent dans le fichier BILLETS 19. Si tel n'est pas le cas, le règlement est refusé lors de l'étape 134. Dans le cas contraire, on examine ensuite lors de l'étape 133 si le billet peut être utilisé à titre de règlement d'un achat, c'est-à-dire comme bon d'achat (le champ correspondant dans le fichier TYPES DE BILLETS 12 ayant été enregistré dans le fichier LOG 11, puis dans le fichier BILLETS 19). Si ce billet ne peut pas correspondre à un bon d'achat, le règlement est refusé lors de l'étape 135. Si au contraire ce billet peut être utilisé comme bon d'achat, on examine ensuite lors de l'étape 136, ses dates et heures de validité. Si celles-ci ne sont pas conformes, on refuse le règlement lors de l'étape 137. Si au contraire, les dates et heures de validité sont conformes, on examine lors de l'étape 186 si la valeur du billet est inférieure ou égale au montant restant dû du règlement à effectuer. Si tel n'est pas le cas, on refuse le règlement lors de l'étape 139. Dans le cas contraire, on examine lors de l'étape 140 si une condition de présence d'un groupe d'articles dans le ticket est nécessaire pour autoriser le règlement par ce billet. Si tel est le cas, on examine lors de l'étape 141 suivante si les articles achetés et préalablement enregistrés correspondent à cette condition. Dans la négative, on refuse le règlement lors de l'étape 142. Dans l'affirmative, on accepte le règlement lors de l'étape 143. Si aucune condition de présence d'un groupe d'articles dans le ticket n'est requise lors de l'étape 140, on passe directement à l'étape 143 d'acceptation du règlement.

L'invention peut faire l'objet de nombreuses variantes par rapport au mode de réalisation décrit ci-dessus et représenté. L'homme du métier pourra en outre réaliser l'ensemble des étapes et fonctions mentionnées ci-dessus à partir de la description donnée ci-dessus et à l'aide de simples techniques de programmation.

## Revendications

1. Dispositif pour délivrer automatiquement des billets d'avantages commerciaux lors du passage des clients à la (aux) caisse(s) (3) d'un magasin pour l'enregistrement et le règlement d'un achat d'articles, comprenant au moins un système informatique, dit serveur de contrôle (1, 2), de contrôle d'au moins une caisse (3),
**caractérisé en ce qu'**il comprend en commun pour toutes les caisses (3) du magasin :
- au moins un fichier TYPES DE BILLETS (12) de définition des différents types de billets pouvant être délivrés par chaque caisse (3), dans lequel sont enregistrées des informations définissant les caractéristiques communes aux billets indépendamment de leur valeur d'avantage commercial et des conditions d'attribution présidant à leur délivrance en caisse,
- au moins un fichier CRITERES (13, 14), distinct d'un fichier TYPES DE BILLETS, dans lequel sont enregistrés, pour chaque type de billets du (des) fichier(s) TYPES DE BILLETS des enregistrements contenant chacun :
. des informations relatives aux conditions d'attribution présidant à la délivrance de chaque billet de ce type, et portant sur l'achat d'articles effectué et/ou sur l'identité du client et/ou sur la date de l'achat et/ou sur l'heure de l'achat,
. et/ou des informations permettant de déterminer la valeur d'avantage commercial de billets de ce type,
- des moyens (1, 4, 5, 6) de saisie et/ou de mise à jour dans le magasin, pour chaque serveur de contrôle (1, 2), des informations enregistrées dans les fichiers TYPES DE BILLETS (12) et CRITERES (13, 14), et **en ce que** chaque serveur de contrôle (1, 2) est programmé pour:
- permettre l'enregistrement des articles correspondant à un achat puis le règlement du montant correspondant par le client, et l'enregistrement de ce règlement,
- après l'enregistrement du règlement, et pour chaque type de billets pouvant être délivré par la caisse (3) correspondante:
. comparer les informations relatives à l'achat d'articles effectué, avec les conditions d'attribution portant sur l'achat d'articles effectué enregistrées dans le (les) fichier(s) CRITERES (13, 14), puis, si les conditions d'attribution portant sur fachat d'articles effectué sont satisfaites, composer le billet à partir des informations des fichiers TYPES DE BILLETS (12) et CRITERES (13, 14) et des informations enregistrées lors de l'achat sur les articles de l'achat, et notamment déterminer la valeur d'avantage commercial correspondante,
. et/ou comparer les-informations relatives à l'identité du client éventuellement enregistrées lors du règlement, avec les conditions d'attribution portant sur l'identité du client enregistrées dans le(s) fichier(s) CRITERES (13, 14), puis, si les conditions d'attribution portant sur l'identité du client sont satisfaites, composer le billet à partir des informations des fichiers TYPES DE BILLETS (12) et CRITERES (13, 14) et des informations enregistrées lors de l'achat sur l'identité du client, et notamment déterminer la valeur d'avantage commercial correspondante,
- puis délivrer le (les) billet(s) attribué(s) au client.

2. Dispositif selon la revendication 1, **caractérisé en ce qu'**il comprend au moins un fichier TYPES DE BILLETS (12) enregistré sur la mémoire de masse d'au moins un serveur de contrôle (1, 2).

3. Dispositif selon l'une des revendications 1 et 2, **caractérisé en ce qu'**il comprend au moins un fichier CRITERES, dit fichier CRITERES/TICKETS (13) définissant des conditions d'attribution portant sur l'achat d'articles effectué.

4. Dispositif selon la revendication 3, **caractérisé en ce qu'**il comprend au moins un fichier CRITERES/TICKETS (13) enregistré sur la mémoire de masse d'au moins un serveur de contrôle (1, 2).

5. Dispositif selon l'une des revendications 1 à 4, **caractérisé en ce qu'**il comprend au moins un fichier CRITERES, dit fichier CRITERES/CLIENTS (14), définissant des conditions d'attribution portant sur l'identité de client(s).

6. Dispositif selon la revendication 5, **caractérisé en ce qu'**il comprend au moins un fichier CRITERES/CLIENTS (14) enregistré sur la mémoire de masse d'au moins un serveur de contrôle (1, 2).

7. Dispositif selon l'une des revendications 1 à 6, **caractérisé en ce qu'**il comprend une pluralité de serveurs de contrôle (1, 2) associés chacun à au moins une caisse (3), et reliés par un réseau informatique commun (4), l'un (1) des serveurs de contrôle étant programmé pour gérer et mettre à jour des informations communes à tous les serveurs de contrôle (1, 2) -notamment en les dupliquant sur chaque serveur de contrôle (1, 2) via le réseau (4)-, ces informations communes comprenant les fichiers TYPES DE BILLETS (12) et CRITERES (13, 14), et au moins un fichier ARTICLES (20) relatif aux articles du magasin.

8. Dispositif selon les revendications 5 et 7, **caractérisé en ce qu'**il comprend au moins un système informatique, dit serveur CLIENTS (8), relié sur le réseau (4) des serveurs de contrôle (1, 2), et comprenant un fichier CARTES (16) contenant des informations relatives aux clients et aux cartes présentées par les clients lors des règlements, au moins un fichier TICKETS (17) dans lequel sont enregistrées des informations relatives aux achats antérieurs des clients, et des moyens de calcul et de génération d'au moins un fichier CRITERES/CLIENTS (14) comprenant des informations associant un type de billets à un client identifié.

9. Dispositif selon la revendication 8, **caractérisé en ce que** le fichier TICKETS (17) est établi et/ou mis à jour chaque jour après la fermeture du magasin et contient des données relatives aux achats du jour des clients identifiés dans le fichier CARTES (16).

10. Dispositif selon la revendication 3 et l'une des revendications 1 à 9, **caractérisé en ce que** le fichier CRITERES/TICKETS (13) comprend, pour chaque type de billets, un champ permettant de définir une méthode de calcul applicable pour déterminer les conditions d'attribution et/ou la valeur d'avantage commercial de billets de ce type, et **en ce qu'**il comprend un fichier METHODES DE CALCUL (15) dans lequel sont mémorisées différentes méthodes de calcul applicables.

11. Dispositif selon les revendications 3 et 5, et l'une des revendications 1 à 10, **caractérisé en ce que** chaque serveur de contrôle (1, 2) est programmé pour comparer, pour chaque type de billets, les informations relatives à l'achat d'articles effectué, aux conditions d'attribution du (des) fichier(s) CRITERES/TICKET (13), et pour comparer ensuite, pour chaque type de billets, les informations relatives à l'identité du client éventuellement enregistrées lors du règlement, avec les informations relatives à l'identité de client(s) du (des) fichier(s) CRITERES/CLIENTS (14), puis lorsqu'un billet attribué selon les conditions d'attribution d'un fichier CRITERES/CLIENTS (14) est du même type qu'un billet attribué selon les conditions d'attribution d'un fichier CRITERES/TICKET (13), additionner les valeurs d'avantage commercial correspondantes pour calculer la valeur totale du billet avant de le délivrer.

12. Dispositif selon la revendication 3 et l'une des revendications 1 à 11, **caractérisé en ce que** le fichier CRITERES/TICKET (13) comprend, pour chaque type de billets, un champ permettant de définir un groupe d'article(s) devant être présent ou absent dans l'achat d'articles du client pour déclencher l'attribution de billets de ce type.

13. Dispositif selon l'une des revendications 1 à 12, **caractérisé en ce qu'**il comprend un seul fichier TYPES DE BILLETS (12) comprenant, pour chaque type de billets, un champ définissant une liste de caisses (3) auxquelles la délivrance de billets de ce type est autorisée, et **en ce que** chaque serveur de contrôle (1, 2) est programmé pour déterminer, après un achat par un client à une caisse (3), les types de billets attribuables à cette caisse (3), puis, si les conditions d'attribution sont satisfaites, composer et délivrer le (les) billet(s) attribué(s) au client.

14. Dispositif selon l'une des revendications 1 à 13, **caractérisé en ce que** le fichier TYPES DE BILLETS (12) comprend, pour chaque type de billets un texte d'informations destinées au client concernant l'avantage commercial correspondant, avec, dans ce texte, un symbole représentatif de la valeur de l'avantage commercial, et **en ce que** chaque serveur de contrôle (1, 2) est programmé pour remplacer ledit symbole par la valeur calculée d'avantage commercial correspondante avant de déliwer un billet de ce type.

15. Dispositif selon l'une des revendications 1 à 14, **caractérisé en ce que** le fichier TYPES DE BILLETS (12) comprend, pour chaque type de billets, un champ définissant une unité de valeur dans laquelle la valeur d'avantage commercial est exprimée.

16. Dispositif selon l'une des revendications 1 à 15, **caractérisé en ce que** les caisses (3) étant chacune dotée d'une imprimante de ticket de caisse, le fichier TYPES DE BILLETS (12) comprend, pour chaque type de billets, un champ définissant un mode d'impression des billets de ce type choisi parmi : une impression par l'imprimante de ticket de caisse à la suite du ticket de caisse sans séparation du billet du ticket de caisse ; une impression par l'imprimante de ticket de caisse après le ticket de caisse avec séparation du billet et du ticket de caisse ; une impression par une imprimante distincte de l'imprimante de ticket de caisse mais localisée auprès de la caisse (3) correspondante.

17. Dispositif selon l'une des revendications 1 à 16, **caractérisé en ce que** le fichier TYPES DE BILLETS (12) comprend, pour chaque type de billets, un champ indiquant si les billets de ce type peuvent être délivrés à tous les clients ou à certains d'entre eux seulement.

18. Dispositif selon l'une des revendications 1 à 17, **caractérisé en ce que** le fichier TYPES DE BILLETS (12) comprend, pour chaque type de billets, un champ indiquant si un code à barres doit être imprimé ou non simultanément aux billets de ce type.

19. Dispositif selon l'une des revendications 1 à 18, **caractérisé en ce que**, pour composer et délivrer un billet attribué au client, chaque serveur de contrôle (1, 2) est programmé pour:
- former à partir des informations des fichiers TYPES DE BILLETS (12) et CRITERES (13, 14), des données représentant un texte avec la valeur d'avantage commercial du billet,
- imprimer ces données par des moyens d'impression localisés auprès de la caisse (3),
- mettre à jour un fichier (11) recensant les billets délivrés.

20. Système informatique d'encaissement de magasin comprenant au moins une caisse (3) pour l'enregistrement et le règlement des achats d'articles et au moins un système informatique, dit serveur de contrôle (1, 2), de contrôle d'au moins une caisse (3), **caractérisé en ce qu'**il comprend un dispositif selon l'une des revendications 1 à 19.

21. Procédé pour délivrer automatiquement des billets d'avantages commerciaux lors du passage des clients à la (aux) caisse(s) (3) d'un magasin pour l'enregistrement et le règlement d'un achat d'articles, ce magasin comprenant au moins un système informatique serveur, dit serveur de contrôle (1, 2), de contrôle d'au moins une caisse (3), **caractérisé en ce qu'**on enregistre et on met à jour, dans le magasin, pour chaque serveur de contrôle (1, 2), et en commun pour toutes les caisses (3) du magasin:
- dans au moins un fichier TYPES DE BILLETS (12) de définition des différents types de billets pouvant être délivrés par chaque caisse (3), des informations définissant des caractéristiques communes aux billets indépendamment de leur valeur d'avantage commercial et des conditions d'attribution présidant à leur délivrance en caisse,
- dans au moins un fichier CRITERES (13, 14), distinct d'un fichier TYPES DE BILLETS, pour chaque type de billets du (des) fichier(s) TYPES DE BILLETS au moins un enregistrement contenant:
. des informations relatives aux conditions d'attribution présidant à la délivrance de chaque billet de ce type, et portant sur l'achat d'articles effectué, et/ou sur l'identité du client, et/ou sur la date de l'achat, et/ou sur l'heure de l'achat,
. et/ou des informations permettant de déterminer la valeur d'avantage commercial de billets de ce type,
et **en ce que**, chaque serveur de contrôle (1, 2) étant programmé pour permettre l'enregistrement des articles correspondant à un achat puis le règlement du montant correspondant par le client et l'enregistrement de ce règlement, après l'enregistrement du règlement, et pour chaque type de billets pouvant être délivré par la caisse (3) correspondante:
. on compare les informations relatives à l'achat d'articles effectué, avec les conditions d'attribution portant sur l'achat d'articles effectué enregistrées dans le (les) fichier(s) CRITERES (13, 14), puis, si les conditions d'attribution portant sur l'achat d'articles effectué sont satisfaites, on compose le billet à partir des informations des fichiers TYPES DE BILLETS et CRITERES et des informations enregistrées lors de l'achat sur les articles de l'achat, et notamment on détermine la valeur d'avantage commercial correspondante,
. et/ou on compare les informations relatives à l'identité du client éventuellement enregistrées lors du règlement, avec les conditions d'attribution portant sur l'identité du client enregistrées dans le(s) fichier(s) CRITERES (13, 14), puis, si les conditions d'attribution portant sur l'identité du client sont satisfaites, on compose le billet à partir des informations des fichiers TYPES DE BILLETS et CRITERES et des informations enregistrées lors de l'achat sur l'identité du client, et notamment on détermine la valeur d'avantage commercial correspondante,
- puis on délivre le (les) billet(s) attribué(s) au client.

22. Procédé selon la revendication 21, **caractérisé en ce qu'**on enregistre au moins un fichier TYPES DE BILLETS (12) sur la mémoire de masse d'au moins un serveur de contrôle (1, 2).

23. Procédé selon l'une des revendications 21 et 22, **caractérisé en ce qu'**on enregistre des informations relatives à des conditions d'attribution portant sur l'achat d'articles effectué par le client, dans au moins un fichier CRITERES, dit fichier CRITERES/TICKETS (13).

24. Procédé selon la revendication 23, **caractérisé en ce qu'**on enregistre au moins un fichier CRITERES/TICKETS (13) sur la mémoire de masse d'au moins un serveur de contrôle (1, 2).

25. Procédé selon l'une des revendications 21 à 24, **caractérisé en qu**'on enregistre des informations relatives à des conditions d'attribution portant sur l'identité de client(s) dans au moins un fichier CRITERES, dit fichier CRITERES/CLIENTS (14).

26. Procédé selon la revendication 25, **caractérisé en ce qu'**on enregistré au moins un fichier CRITERES/CLIENTS (14) sur la mémoire de masse d'au moins un serveur de contrôle (1, 2).

27. Procédé selon l'une des revendications 21 à 26, **caractérisé en ce qu'**on relie par un réseau informatique commun (4), une pluralité de serveurs de contrôle (1, 2) associés chacun à au moins une caisse (3), l'un (1) des serveurs de contrôle étant programmé pour gérer et mettre à jour via le réseau (4) des informations communes à tous les serveurs de contrôle (1, 2) -notamment en les dupliquant sur chaque serveur de contrôle (1, 2) via le réseau-, ces informations communes comprenant les fichiers TYPES DE BILLETS (12) et CRITERES (13, 14), et au moins un fichier ARTICLES (20) relatif aux articles du magasin.

28. Procédé selon les revendications 25 et 27, **caractérisé en ce qu'**à partir d'informations que l'on enregistre relatives aux clients et aux cartes présentées lors des règlements par les clients, et d'informations que l'on enregistre relative aux achats antérieurs des clients, on calcule et on génère au moins un fichier CRITERES/CLIENTS (14) comprenant des informations associant un type de billet à un client identifié.

29. Procédé selon les revendications 25 et 28, **caractérisé en ce qu'**on enregistre les informations relatives aux clients et aux cartes présentées par les clients lors des règlements, les informations relatives aux achats antérieurs des clients, et le (les) fichier(s) CRITERES/CLIENTS (14) dans un système informatique, dit serveur CLIENT (8), connecté sur le réseau (4) des serveurs de contrôle (1, 2).

30. Procédé selon l'une des revendications 21 à 29, **caractérisé en ce qu'**on établit et/ou on met à jour, chaque jour après la fermeture du magasin, un fichier TICKETS (17) dans lequel on enregistre les données relatives aux achats du jour des clients identifiés dans un fichier CARTES (16).

31. Procédé selon les revendications 23 et 25, et l'une des revendications 21 à 30, **caractérisé en ce qu'**on compare, pour chaque type de billet, les informations relatives à l'achat d'articles effectué aux conditions d'attribution du (des) fichier(s) CRITERES/TICKET (13), et on compare ensuite pour chaque type de billets, les informations relatives à l'identité du client éventuellement enregistrées lors du règlement, avec les informations relatives à l'identité de client(s) du (des) fichier(s) CRITERES/CLIENTS (14), puis lorsqu'un billet attribué selon les conditions d'attribution d'un fichier CRITERES/CLIENTS (14) est du même type qu'un billet attribué selon les conditions d'attribution d'un fichier CRITERES/TICKET (13), on additionne les valeurs d'avantage commercial correspondantes pour calculer la valeur totale du billet avant de le délivrer.

32. Procédé selon l'une des revendications 21 à 31, **caractérisé en ce que** les caisses (3) étant chacune dotée d'une imprimante de ticket de caisse, pour délivrer un billet, on l'imprime sur une imprimante choisie parmi : l'imprimante de ticket de caisse, le billet étant imprimé à la suite du ticket de caisse sans séparation du billet et du ticket de caisse ; l'imprimante de ticket de caisse, le billet étant imprimé après le ticket de caisse avec séparation du billet et du ticket de caisse ; une imprimante distincte de l'imprimante de ticket de caisse mais localisée auprès de la caisse(3) correspondante.

33. Procédé selon l'une des revendications 21 à 32, **caractérisé en ce que** pour composer et délivrer un billet attribué au client :
- on forme à partir des informations des fichiers TYPES DE BILLETS (12) et CRITERES (13, 14), des données représentant un texte avec la valeur d'avantage commercial du billet,
- on imprime ces données par des moyens d'impression localisés auprès de la caisse (3),
- on met à jour un fichier recensant les billets délivrés.

## Claims

1. A device for automatic issuing of commercial advantage cards when clients go to the check-out(s) (3) of a store, in order to record and pay for articles purchased, comprising at least one computer system, known as the control server (1, 2), to control at least one check-out (3),
**characterized in that** it comprises in common for all the check-out(s) (3) in the store:
- at least one COUPON-TYPE file (12), for definition of the various types of coupons which can be issued by each check-out (3), in which there is recorded data which defines the characteristics common to the coupons, independently of their commercial advantage value and the conditions of allocation for issuing the coupons at the check-out;
- at least one CRITERIA file (13, 14), distinct from a COUPON-TYPE file, in which there are recorded, for each type of coupon in the COUPON-TYPE file(s), records, each of which contains:
. data relating to the conditions of allocation for issuing of each coupon of this type, and concerning the articles purchased and/or the identity of the client and/or the date of purchase and/or the time of purchase;
. and/or data which makes it possible to determine the commercial advantage value of coupons of this type;
- means (1, 4, 5, 6) for acquisition and/or updating in the store, for each control server (1, 2), of the data recorded in the COUPON-TYPE (12) and CRITERIA (13, 14) files;
and each control server (1, 2) is programmed to:
- permit recording of the articles corresponding to a purchase, then payment of the corresponding amount by the client, and recording of this payment,
- after the payment has been recorded, and for each type of coupon which can be issued by the corresponding check-out (3) :
. comparison of the data relating to the articles purchased, with the conditions of allocation concerning the purchase made of articles, recorded in the CRITERIA file(s) (13, 14), then, if the conditions of allocation concerning the articles purchased are fulfilled, composition of the coupon on the basis of data in the COUPON-TYPE (12) and CRITERIA (13, 14) files and of data recorded during purchase concerning the articles purchased, and in particular determination of the corresponding advantage value;
. and/or comparison of the data relating to the identity of the client, which may be recorded during payment, with the conditions of allocation concerning the identity of the client, which are recorded in the CRITERIA file(s) (13, 14), then, if the conditions of allocation concerning the identity of the client are fulfilled, composition of the coupon on the basis of data in the COUPON-TYPE (12) and CRITERIA (13, 14) files and of the data recorded during the purchase concerning the identity of the client, and in particular determination of the corresponding commercial advantage value; and
- then issuing the coupon(s) allocated to the client.

2. A device as claimed in claim 1, **characterized in that** it comprises at least one COUPON-TYPE file (12), which is recorded in the mass memory of at least one control server (1, 2).

3. A device as claimed in one of claims 1 and 2,
**characterized in that** it comprises at least one CRITERIA file, known as the CRITERIA/RECEIPT file (13), which defines conditions of allocation concerning the articles purchased.

4. A device as claimed in claim 3, **characterized in that** it comprises at least one CRITERIA/RECEIPT file (13), which is recorded in the mass memory of at least one control server (1, 2).

5. A device as claimed in any one of claims 1 to 4,
**characterized in that** it comprises at least one CRITERIA file, known as the CRITERIA/CLIENT file (14), which defines conditions of allocation concerning the identity of the client (s).

6. A device as claimed in claim 5, **characterized in that** it comprises at least one CRITERIA/CLIENT file (14), which is recorded in the mass memory of at least one control server (1, 2).

7. A device as claimed in any one of claims 1 to 6,
**characterized in that** it comprises a plurality of control servers (1, 2), each of which is associated with at least one check-out (3), and is connected by a common computer network (4), one (1) of the control servers being programmed to control and update data common to all the control servers (1, 2), in particular by duplicating this data in each control server (1, 2), via the network (4), this common data comprising COUPON-TYPE (12) and CRITERIA (13, 14), files and at least one ARTICLE file (20) relating to the articles in the store.

8. A device as claimed in claims 5 and 7,
**characterized in that** it comprises at least one computer system, known as the CLIENT server (8), which is connected to the network (4) of the control servers (1, 2), and comprises a CARD file (16), which contains data relating to the clients and to the cards presented by the clients when payments are made, at least one RECEIPT file (17), in which there is recorded data relating to previous purchases made by the clients, and means for calculation and generation of at least one CRITERIA/CLIENT file (14), comprising data associating a type of coupon with a client identified.

9. A device as claimed in claim 8, **characterized in that** the RECEIPT file (17) is established and/or updated every day after closure of the store, and contains data relating to purchases made during the day by clients identified in the CARD file (16).

10. A device as claimed in claim 3 and any one of claims 1 to 9, **characterized in that** the CRITERIA/RECEIPT file (13) comprises, for each type of coupon, a field which makes it possible to define a method of calculation applicable in order to determine the conditions of allocation and/or the commercial advantage value of coupons of this type, and it comprises a METHODS OF CALCULATION file (15), in which various methods of calculation applicable are stored.

11. A device as claimed in claims 3 and 5, and in any one of claims 1 to 10, **characterized in that** each control server (1, 2) is programmed, for each type of coupon, to compare the data relating to articles purchased, with the conditions of allocation of the CRITERIA/RECEIPT file(s) (13), and then, for each type of coupon, to compare the data relating to the identity of the client, which can be recorded during payment, with the data relating to the identity of the client(s) in the CRITERIA/CLIENT file(s) (14), then, when a coupon allocated in accordance with the conditions of allocation of a CRITERIA/CLIENT file (14) is of the same type as a coupon allocated according to the conditions of allocation of a CRITERIA/RECEIPT file (13), addition of the corresponding commercial advantage values, in order to calculate the total value of the coupon before it is issued.

12. A device as claimed in claim 3 and any one of claims 1 to 11, **characterized in that**, for each type of coupon, the CRITERIA/RECEIPT file 13 comprises a field which makes it possible to define a group of articles which must be present or absent in the articles purchased by the client, in order to trigger allocation of coupons of this type.

13. A device as claimed in any one of claims 1 to 12,
**characterized in that** it comprises a single COUPON-TYPE file (12), comprising, for each type of coupon, a field which defines a list of check-outs (3), at which issuing of coupons of this type is authorised, and **in that** each control server (1, 2) is programmed, after a purchase is made by a client at a check-out (3), to determine the types of coupons which can be allocated at this check-out (3), then, if the conditions of allocation are fulfilled, to compose and issue the coupon(s) allocated to the client.

14. A device as claimed in any one of claims 1 to 13,
**characterized in that** for each type of coupon, the COUPON-TYPE file (12) comprises a data text destined for the client concerning the corresponding commercial advantage, together with, in this text, a symbol which represents the commercial advantage value, and each control server (1, 2) is programmed to replace the said symbol by the corresponding commercial advantage value calculated, before a coupon of this type is issued.

15. A device as claimed in any one of claims 1 to 14,
**characterized in that**, for each type of coupon, the COUPON-TYPE file (12) comprises a field which defines a unit of value, in which the commercial advantage value is expressed.

16. A device as claimed in any one of claims 1 to 15,
**characterized in that**, since each of the check-outs (3) is provided with a check-out receipt printer, for each type of coupon the COUPON-TYPE file (12) comprises a field which defines a method for printing coupons of this type, selected from amongst: printing by the check-out receipt printer, after the check-out receipt, without separation of the coupon from the check-out receipt; printing by the check-out receipt printer, after the check-out receipt, with separation of the coupon and the check-out receipt; and printing by means of a printer other than the check-out receipt printer, which is located near the corresponding check-out (3).

17. A device as claimed in any one of claims 1 to 16,
**characterized in that** for each type of coupon, the COUPON-TYPE file (12) comprises a field indicating whether the coupons of this type can be issued to all the clients or to only some of them.

18. A device as claimed in any one of claims 1 to 17,
**characterized in that** for each type of coupon, the COUPON-TYPE file (12) comprises a field which indicates whether or not a bar code must be printed simultaneously with the coupons of this type.

19. A device as claimed in any one of claims 1 to 18,
**characterized in that**, in order to compose and issue a coupon allocated to the client, each control server (1, 2) is programmed to:
- form from data in the COUPON-TYPE (12) and CRITERIA (13, 14) files, data representing a text with the commercial advantage value of the coupon;
- have this data printed by printing means which are located near to the check-out (3); and
- update a file (11) which inventories the coupons issued.

20. A store computerised cashing system, comprising at least one check-out (3) for recording and payment of articles purchased, and at least one computer system, known as the control server (1, 2), to control at least one check-out (3), **characterized in that** it comprises a device as claimed in any one of claims 1 to 19.

21. A method for automatic issuing of commercial advantage coupons when clients go to the check-out(s) (3) of a store, in order to record and pay for articles purchased, this store having at least one server computer system, known as the control server (1, 2), to control at least one check-out (3), **characterized in that** there are recorded and updated in the store, for each control server (1, 2), and in common for all the check-outs (3) in the store:
- in at least one COUPON-TYPE file (12) for definition of the various types of coupons which can be issued by each check-out (3), data defining the characteristics common to the coupons, independently of their commercial advantage value, and conditions of allocation for issuing the coupons at the check-out;
- in at least one CRITERIA file (13, 14), distinct from a COUPON-TYPE file, for each type of coupon in the COUPON-TYPE file(s), at least one record containing:
. data relating to the conditions of allocation for issuing of each coupon of this type, and concerning articles purchased, and/or the identity of the client, and/or the date of purchase, and/or the time of purchase;
. and/or data which makes it possible to determine the commercial advantage value of coupons of this type; and, each control server (1, 2) being programmed to permit recording of articles corresponding to a purchase, then payment of the corresponding amount by the client, and recording of this payment, and, after recording of the payment, and for each type of coupon which can be issued by the corresponding check-out (3):
. there is comparison of the data relating to articles purchased, with the conditions of allocation concerning articles purchased, which are recorded in the CRITERIA file(s) (13, 14), then, if the conditions of allocation concerning the articles purchased are fulfilled, composition of the coupon on the basis of data in the COUPON-TYPE and CRITERIA files, and of the data recorded during the purchase concerning the articles purchased, and in particular determination of the corresponding commercial advantage value;
. and/or comparison of the data relating to the identity of the client, which may be recorded during payment, with the conditions of allocation concerning the identity of the client, which are recorded in the CRITERIA file(s) (13, 14), then, if the conditions of allocation concerning the identity of the client are fulfilled, composition of the coupon on the basis of information in the COUPON-TYPE and CRITERIA files, and of the data recorded during the purchase concerning the identity of the client, and in particular, determination of the corresponding commercial advantage value; and
- then issuing the coupon(s) allocated to the client.

22. A method as claimed in claim 21, **characterized in that** at least one COUPON-TYPE file (12) is recorded in the mass memory of at least one control server (1, 2).

23. A method as claimed in either of claims 21 and 22,
**characterized in that** data relating to conditions of allocation concerning articles purchased by the client, is recorded in at least one CRITERIA file, known as the CRITERIA/COUPON file (13).

24. A method as claimed in claim 23, **characterized in that** at least one CRITERIA/COUPON file (13) is recorded in the mass memory of at least one control server (1, 2).

25. A method as claimed in any one of claims 21 to 24,
**characterized in that** data relating to conditions of allocation concerning the identity of the client(s) is recorded in at least one CRITERIA file, known as the CRITERIA/CLIENT file (14).

26. A method as claimed in claim 25, **characterized in that** at least one CRITERIA/CLIENT file (14) is recorded in the mass memory of at least one control server (1, 2).

27. A method as claimed in any one of claims 21 to 26,
**characterized in that** a plurality of control servers (1, 2), each associated with at least one check-out (3), is connected by means of a common computer network (4), one (1) of the control servers being programmed to control and update via the network (4) data which is common to all the control servers (1, 2), in particular by duplicating this data on each control server (1, 2) via the network, this common data comprising COUPON-TYPE (12) and CRITERIA (13, 14) files, and at least one ARTICLE file (20) relating to articles in the store.

28. A method as claimed in claims 25 and 27,
**characterized in that**, on the basis of data recorded relating to the clients and the cards presented during payments by the client, and data recorded concerning previous purchases by the clients, at least one CRITERIA/CLIENT file (14) is calculated and generated, comprising data associating a type of coupon with a client identified.

29. A method as claimed in claims 25 and 28,
**characterized in that** the data relating to the clients and the cards presented by the clients during payments, the data relating to previous purchases by the clients, and the CRITERIA/CLIENT file(s) (14) are recorded in a computer system known as the CLIENT server (8), which is connected to the network (4) of the control servers (1, 2).

30. A method as claimed in any one of claims 21 to 29,
**characterized in that**, each day, after closure of the store, a RECEIPT file (17) is established and/or updated, in which the data relating to purchases made during the day, by clients identified in a CARD file (16), is recorded.

31. A method as claimed in claims 23 and 25, and in any one of claims 21 to 30, **characterized in that**, for each type of coupon, there is comparison of the data relating to articles purchased, in accordance with the conditions of allocation of the CRITERIA/RECEIPT file(s) (13), and then, for each type of coupon, there is comparison of the data relating to the identity of the client, which may be recorded during the payment, with the data relating to the identity of the client(s) in the CRITERIA/CLIENT file(s) (14), then, when a coupon allocated in accordance with the conditions of allocation of a CRITERIA/CLIENT file (14) is of the same type as a coupon allocated according to the conditions of allocation of a CRITERIA/RECEIPT file (13), the corresponding commercial advantage values are added up, in order to calculate the total value of the coupon before it is issued.

32. A method as claimed in any one of claims 21 to 31,
**characterized in that**, since each of the check-outs (3) is provided with a check-out receipt printer, in order to issue a coupon, there is printing on a printer selected from amongst: the check-out receipt printer, the coupon being printed after the check-out receipt, without separation of the coupon and the check-out receipt; the check-out receipt printer, the coupon being printed after the check-out receipt, with separation of the coupon and the check-out receipt; and a printer other than the check-out receipt printer, but which is located near the corresponding check-out (3).

33. A method as claimed in any one of claims 21 to 32,
**characterized in that**, in order to compose and issue a coupon allocated to the client:
- on the basis of data in the COUPON-TYPE (12) and CRITERIA (13, 14) files, data is constituted which represents a text with the commercial advantage value of the coupon;
- this data is printed by printing means located near to the check-out (3); and
- a file which inventories the coupons issued is updated.

## Patentansprüche

1. Vorrichtung zur automatischen Ausgabe von kommerziellen Rabattmarken bei der Passage von Kunden an der/den Kasse(n) (3) eines Ladens zum Registrieren und Abrechnen des Kaufs von Waren, umfassend wenigstens ein Informationssystem, Steuerserver (1, 2) genannt, zum Steuern von wenigstens einer Kasse (3), **dadurch gekennzeichnet, dass** sie gemeinsam für alle Kassen (3) des Ladens folgendes umfasst:
- wenigstens eine MARKENTYPEN-Datei (12) zum Definieren verschiedener Markentypen, die von jeder Kasse (3) ausgegeben werden können, in der Informationen gespeichert sind, die die den Marken gemeinsamen Charakteristiken unabhängig von ihrem kommerziellen Rabattwert und den Zuteilungsbedingungen für ihre Ausgabe an der Kasse definieren,
- wenigstens eine KRITERIEN-Datei (13, 14), die sich von der MARKENTYPEN-Datei unterscheidet und in der für jeden Markentyp des/der MARKENTYPEN-Datei(en) Registrierungen gespeichert sind, die jeweils folgendes enthalten:
. Informationen über Zuteilungsbedingungen, die für die Ausgabe jeder Marke dieses Typs gelten und die sich auf den getätigten Warenkauf und/oder auf die Identität des Kunden und/oder auf das Kaufdatum und/oder auf die Kaufzeit beziehen,
. und/oder Informationen, mit denen der kommerzielle Rabattwert von Marken dieses Typs ermittelt werden kann,
- Mittel (1, 4, 5, 6), um in dem Laden für jeden Steuerserver (1, 2) Informationen zu erfassen und/oder zu aktualisieren, die in den Dateien MARKENTYPEN (12) und KRITERIEN (13, 14) gespeichert sind,
und dadurch, dass jeder Steuerserver (1, 2) programmiert ist für:
- das Zulassen einer. Registrierung von Waren, die einem Kauf entsprechen, die anschließende Begleichung des entsprechenden Betrags durch den Kunden und die Registrierung dieser Begleichung,
- nach der Registrierung der Begleichung und für jeden Markentyp, der von der entsprechenden Kasse (3) ausgegeben werden kann:
. Vergleichen der Informationen über den getätigten Warenkauf mit den Zuteilungsbedingungen, die sich auf diesen getätigten Warenkauf beziehen, die in der/den Datei(en) KRITERIEN (13, 14) gespeichert sind, und, wenn die Zuteilungsbedingungen für den getätigten Warenkauf erfüllt sind, Erstellen der Marke anhand von Informationen in den Dateien MARKENTYPEN (12) und KRITERIEN (13, 14) und von beim Kauf registrierten Informationen über die gekauften Waren und insbesondere Ermitteln des entsprechenden kommerziellen Rabattwertes,
. und/oder Vergleichen der bei der Begleichung eventuell registrierten Informationen über die Identität des Kunden mit den in der/den KRITERIEN-Datei(en) (13, 14) gespeicherten Zuteilungsbedingungen in Bezug auf die Identität des Kunden, und, wenn die Zuteilungsbedingungen in Bezug auf die Identität des Kunden erfüllt sind, Erstellen der Marke anhand von Informationen in den Dateien MARKENTYPEN (12) und KRITERIEN (13, 14) und von beim Kauf registrierten Informationen über die Identität des Kunden und insbesondere Ermitteln des entsprechenden kommerziellen Rabattwertes,
- danach Ausgeben der zugeteilten Marke(n) an den Kunden.

2. Vorrichtung nach Anspruch 1, **dadurch gekennzeichnet, dass** sie wenigstens eine MARKENTYPEN-Datei (12) umfasst, die im Massenspeicher von wenigstens einem Steuerserver (1, 2) gespeichert ist.

3. Vorrichtung nach einem der Ansprüche 1 und 2, **dadurch gekennzeichnet, dass** sie wenigstens eine KRITERIEN-Datei, KRITERIEN/TICKETS (13) genannt, umfasst, die Zuteilungsbedingungen in Bezug auf getätigte Warenkäufer definiert.

4. Vorrichtung nach Anspruch 3, **dadurch gekennzeichnet, dass** sie wenigstens eine KRITERIEN/TICKETS-Datei (13) umfasst, die im Massenspeicher von wenigstens einem Steuerserver (1, 2) gespeichert ist.

5. Vorrichtung nach einem der Ansprüche 1 bis 4, **dadurch gekennzeichnet, dass** sie wenigstens eine KRITERIEN-Datei, KRITERIEN/KUNDEN-Datei (14) genannt, umfasst, die Zuteilungsbedingungen in Bezug auf die Identität des/der Kunden definiert.

6. Vorrichtung nach Anspruch 5, **dadurch gekennzeichnet, dass** sie wenigstens eine KRITERIEN/KUNDEN-Datei (14) umfasst, die im Massenspeicher von wenigstens einem Steuerserver (1, 2) gespeichert ist.

7. Vorrichtung nach einem der Ansprüche 1 bis 6, **dadurch gekennzeichnet, dass** sie eine Mehrzahl von Steuerservern (1, 2) umfasst, die jeweils mit wenigstens einer Kasse (3) assoziiert und durch ein gemeinsames Informationsnetz (4) verbunden sind, wobei einer (1) der Steuerserver so programmiert ist, dass er die allen Steuerservern (1, 2) gemeinsamen Informationen verwaltet und aktualisiert, insbesondere dadurch, dass er sie auf jeden Steuerserver (1, 2) über das Netz (4) dupliziert, wobei diese gemeinsamen Informationen die Dateien MARKENTYPEN (12) und KRITERIEN (13, 14) und wenigstens eine WAREN-Datei (20) in Bezug auf die Waren des Ladens beinhalten.

8. Vorrichtung nach Anspruch 5 und 7, **dadurch gekennzeichnet, dass** sie wenigstens ein Informationssystem, KUNDEN-Server (8) genannt, umfasst, das mit dem Netz (4) von Steuerservern (1, 2) verbunden ist und eine KARTEN-Datei (16) enthält, die Informationen in Bezug auf Kunden und auf Karten beinhaltet, die von den Kunden bei der Begleichung vorgelegt werden, wenigstens eine TICKETS-Datei (17), in der Informationen in Bezug auf frühere Käufe der Kunden gespeichert sind, und Rechen- und Erzeugungsmittel von wenigstens einer KRITERIEN/KUNDEN-Datei (14), die Informationen enthält, die einen Markentyp mit einem identifizierten Kunden assoziieren.

9. Vorrichtung nach Anspruch 8, **dadurch gekennzeichnet, dass** die TICKETS-Datei (17) jeden Tag nach Ladenschluss erstellt und/oder aktualisiert wird und Daten in Bezug auf Käufe identifizierter Kunden an diesem Tag in der KARTEN-Datei (16) enthält.

10. Vorrichtung nach Anspruch 3 und einem der Ansprüche 1 bis 9, **dadurch gekennzeichnet, dass** die KRITERIEN/TICKETS-Datei (13) für jeden Markentyp ein Feld aufweist, mit dem eine Rechenmethode definiert werden kann, die zum Bestimmen der Zuteilungsbedingungen und/oder des kommerziellen Rabattwertes von Marken dieses Typs angewendet werden kann, und dadurch, dass sie eine RECHENMETHODEN-Datei (15) umfasst, in der verschiedene anwendbare Rechenmethoden gespeichert sind.

11. Vorrichtung nach Anspruch 3 und 5 und einem der Ansprüche 1 bis 10, **dadurch gekennzeichnet, dass** jeder Steuerserver (1, 2) so programmiert ist, dass er für jeden Markentyp die Informationen in Bezug auf getätigte Warenkäufe mit den Zuteilungsbedingungen des/der Datei(en) KRITERIEN/TICKET (13) vergleicht und danach für jeden Markentyp die eventuell bei der Begleichung registrierten Informationen in Bezug auf die Identität des Kunden mit den Informationen in Bezug auf die Identität des/der Kunden in der/den Datei(en) KRITERIEN/KUNDEN (14) vergleicht, und dann, wenn eine gemäß den Zuteilungsbedingungen einer KRITERIEN/KUNDEN-Datei (14) zugeteilte Marke vom selben Typ ist wie eine Marke, die gemäß den Zuteilungsbedingungen einer KRITERIEN/TICKET-Datei (13) zugeteilt wurde, Addieren der entsprechenden kommerziellen Rabattwerte zum Errechnen des Gesamtwertes der Marke vor deren Ausgabe.

12. Vorrichtung nach Anspruch 3 und einem der Ansprüche 1 bis 11, **dadurch gekennzeichnet, dass** die KRITERIEN/TICKET-Datei (13) für jeden Markentyp ein Feld aufweist, in dem eine Gruppe von Waren definiert werden kann, die im Kaufumfang des Kunden enthalten sein müssen oder nicht, um die Zuteilung von Marken dieses Typs auszulösen.

13. Vorrichtung nach einem der Ansprüche 1 bis 12, **dadurch gekennzeichnet, dass** sie eine einzige MARKENTYPEN-Datei (12) umfasst, die für jeden Markentyp ein Feld aufweist, das eine Liste von Kassen (3) definiert, an denen Marken dieses Typs ausgegeben werden können, und dadurch, dass jeder Steuerserver (1, 2) so programmiert ist, dass nach einem von einem Kunden getätigten Kauf an einer Kasse (3) die dieser Kasse (3) zuteilungsfähigen Markentypen bestimmt und dann, wenn die Zuteilungsbedingungen erfüllt sind, die zugeteilte(n) Marke(n) erstellt und an den Kunden ausgegeben werden kann/können.

14. Vorrichtung nach einem der Ansprüche 1 bis 13, **dadurch gekennzeichnet, dass** die MARKENTYPEN-Datei(12) für jeden Markentyp einen Informationstext für den Kunden in Bezug auf den entsprechenden kommerziellen Rabatt enthält, wobei in diesem Text ein Symbol integriert ist, das den kommerziellen Rabattwert repräsentiert, und dadurch, dass jeder Steuerserver (1, 2) so programmiert ist, dass er das genannte Symbol durch den entsprechenden errechneten kommerziellen Rabattwert ersetzt, bevor eine Marke dieses Typs ausgegeben wird.

15. Vorrichtung nach einem der Ansprüche 1 bis 14, **dadurch gekennzeichnet, dass** die MARKENTYPEN-Datei (12) für jeden Markentyp ein Feld aufweist, das eine Werteeinheit definiert, in der der kommerzielle Rabattwert ausgedrückt ist.

16. Vorrichtung nach einem der Ansprüche 1 bis 15, **dadurch gekennzeichnet, dass**, wenn jede Kasse (3) mit einem Kassenscheindrucker ausgestattet ist, die MARKENTYPEN-Datei(12) für jeden Markentyp ein Feld aufweist, das einen Modus zum Ausdrucken von Marken dieses Typs definiert, ausgewählt aus: Ausdrucken im Anschluss an den Kassenschein mit dem Kassenscheindrucker ohne Abtrennen der Marke vom Kassenschein; Ausdrucken hinter dem Kassenschein mit dem Kassenscheindrucker, wobei Marke und Kassenschein voneinander getrennt sind; Ausdrucken des Kassenscheins mit einem anderen Drucker als dem Kassenscheindrucker, der sich jedoch an der entsprechenden Kasse (3) befindet.

17. Vorrichtung nach einem der Ansprüche 1 bis 16, **dadurch gekennzeichnet, dass** die MARKENTYPEN-Datei (12) für jeden Markentyp ein Feld aufweist, das anzeigt, ob die Marken dieses Typs an alle Kunden oder nur an bestimmte Kunden ausgegeben werden dürfen.

18. Vorrichtung nach einem der Ansprüche 1 bis 17, **dadurch gekennzeichnet, dass** die MARKENTYPEN-Datei (12) für jeden Markentyp ein Feld aufweist, das anzeigt, ob ein Strichcode gleichzeitig mit den Marken dieses Typs ausgedruckt werden soll.

19. Vorrichtung nach einem der Ansprüche 1 bis 18, **dadurch gekennzeichnet, dass** zum Erstellen und Ausgeben einer dem Kunden zugeteilten Marke jeder Steuerserver (1, 2) programmiert ist für:
- das Erstellen von Daten, die einen Text mit dem kommerziellen Rabattwert der Marke repräsentieren, anhand der Informationen in den Dateien MARKENTYPEN (12) und KRITERIEN (13, 14),
- das Ausdrucken dieser Daten mit einem Drucker, der sich an der Kasse (3) befindet,
- das Aktualisieren einer Datei (11), die die ausgegebenen Marken zählt.

20. Ladenkassen-Informationssystem, umfassend wenigstens eine Kasse (3) zum Registrieren und Begleichen von Warenkäufen und wenigstens ein Informationssystem, Steuerserver (1, 2) genannt, zum Steuern von wenigstens einer Kasse (3), **dadurch gekennzeichnet, dass** es eine Vorrichtung nach einem der Ansprüche 1 bis 19 umfasst.

21. Verfahren zum automatischen Ausgeben von kommerziellen Rabattmarken bei der Passage von Kunden an (einer) Kasse(n) (3) eines Ladens zum Registrieren und Begleichen eines Warenkaufs, wobei der Laden wenigstens einen Informationssystemserver, Steuerserver (1, 2) genannt, zum Steuern von wenigstens einer Kasse (3) umfasst, **dadurch gekennzeichnet, dass** in dem Laden für jeden Steuerserver (1, 2) und gemeinsam für alle Kassen (3) des Ladens folgendes registriert und aktualisiert wird:
- in wenigstens einer MARKENTYPEN-Datei (12) zum Definieren verschiedener Markentypen, die von jeder Kasse (3) ausgegeben werden können, Informationen, die die den Marken gemeinsamen Charakteristiken unabhängig von ihrem kommerziellen Rabattwert und den Zuteilungsbedingungen für ihre Ausgabe an der Kasse definieren,
- in wenigstens einer KRITERIEN-Datei (13, 14), die sich von der MARKENTYPEN-Datei unterscheidet, für jeden Markentyp des/der MARKENTYPEN-Datei (en) wenigstens eine Registrierung, die folgendes enthält:
. Informationen in Bezug auf Zuteilungsbedingungen, die für die Ausgabe jeder Marke dieses Typs gelten und die sich auf den getätigten Warenkauf und/oder auf die Identität des Kunden und/oder auf das Kaufdatum und/oder auf die Kaufzeit beziehen,
. und/oder Informationen, mit denen der kommerzielle Rabattwert von Marken dieses Typs ermittelt werden kann, und dadurch, dass, da jeder Steuerserver (1, 2) für das Zulassen einer Registrierung von Waren, die einem Kauf entsprechen, und das anschließende Begleichen des entsprechenden Betrags durch den Kunden und die Registrierung dieser Begleichung programmiert ist, nach der Registrierung der Begleichung und für jeden Markentyp, der von der entsprechenden Kasse (3) ausgegeben werden kann, folgendes geschieht:
. Vergleichen der Informationen über den getätigten Warenkauf mit den Zuteilungsbedingungen, die sich auf diesen getätigten Warenkauf beziehen, die in der/den Datei(en) KRITERIEN (13, 14) gespeichert sind, und, wenn die Zuteilungsbedingungen für den getätigten Warenkauf erfüllt sind, Erstellen der Marke anhand von Informationen in den Dateien MARKENTYPEN und KRITERIEN und von beim Kauf registrierten Informationen über die gekauften Waren und insbesondere Ermitteln des entsprechenden kommerziellen Rabattwertes,
. und/oder Vergleichen der bei der Begleichung eventuell registrierten Informationen über die Identität des Kunden mit den in der/den KRITERIEN-Datei(en) (13, 14) gespeicherten Zuteilungsbedingungen in Bezug auf die Identität des Kunden, und, wenn die Zuteilungsbedingungen in Bezug auf die Identität des Kunden erfüllt sind, Erstellen der Marke anhand von Informationen in den Dateien MARKENTYPEN und KRITERIEN und von beim Kauf registrierten Informationen über die Identität des Kunden und insbesondere Ermitteln des entsprechenden kommerziellen Rabattwertes,
- danach Ausgeben der zugeteilten Marke(n) an den Kunden.

22. Verfahren nach Anspruch 21, **dadurch gekennzeichnet, dass** wenigstens eine MARKENTYPEN-Datei (12) im Massenspeicher von wenigstens einem Steuerserver (1, 2) registriert ist.

23. Verfahren nach einem der Ansprüche 21 und 22, **dadurch gekennzeichnet, dass** Informationen in Bezug auf Zuteilungsbedingungen für von dem Kunden getätigte Warenkäufe in wenigstens einer Datei KRITERIEN, KRITERIEN/TICKETS-Datei (13) genannt, gespeichert werden.

24. Verfahren nach Anspruch 23, **dadurch gekennzeichnet, dass** wenigstens eine KRITERIEN/TICKETS-Datei (13) im Massenspeicher von wenigstens einem Steuerserver (1, 2) registriert sind.

25. Verfahren nach einem der Ansprüche 21 bis 24, **dadurch gekennzeichnet, dass** Informationen in Bezug auf Zuteilungsbedingungen für die Identität von/eines Kunden in wenigstens einer Datei KRITERIEN, KRITERIEN/KUNDEN (14) genannt, gespeichert sind.

26. Verfahren nach Anspruch 25, **dadurch gekennzeichnet, dass** wenigstens eine KRITERIEN/KUNDEN-Datei (14) im Massenspeicher von wenigstens einem Steuerserver (1, 2) gespeichert ist.

27. Verfahren nach einem der Ansprüche 21 bis 26, **dadurch gekennzeichnet, dass** eine Mehrzahl von Steuerservern (1, 2) durch ein gemeinsames Informationsnetz (4) verbunden sind, die jeweils mit wenigstens einer Kasse (3) assoziiert sind, wobei einer (1) der Steuerserver so programmiert ist, dass er die allen Steuerservern (1, 2) gemeinsamen Informationen über das Netz (4) verwaltet und aktualisiert, insbesondere dadurch, dass er sie auf jeden Steuerserver (1, 2) über das Netz dupliziert, wobei diese gemeinsamen Informationen die Dateien MARKENTYPEN (12) und KRITERIEN (13, 14) und wenigstens eine WAKEN-Datei (20) in Bezug auf die Waren des Ladens beinhalten.

28. Verfahren nach Anspruch 25 und 27, **dadurch gekennzeichnet, dass** anhand von Informationen, die in Bezug auf Kunden und auf Karten registriert sind, die von den Kunden bei der Begleichung vorgelegt werden, und von Informationen, die in Bezug auf frühere Käufe von Kunden registriert sind, wenigstens eine KRITERIEN/KUNDEN-Datei (14) errechnet und erzeugt wird, die Informationen enthält, die einen Markentyp mit einem identifizierten Kunden assoziiert.

29. Verfahren nach Anspruch 25 und 28, **dadurch gekennzeichnet, dass** die Informationen in Bezug auf Kunden und auf Karten, die von Kunden bei Begleichungen vorgelegt werden, die Informationen in Bezug auf frühere Käufe von Kunden und die Datei(en) KRITERIEN/KUNDEN (14) in einem Informationssystem, KUNDEN-Server (8) genannt, gespeichert werden, der an dem Netz (4) von Steuerservern (1, 2) angeschlossen ist.

30. Verfahren nach einem der Ansprüche 21 bis 29, **dadurch gekennzeichnet, dass** jeden Tag nach Ladenschluss eine TICKETS-Datei (17) erstellt und/oder aktualisiert wird, in der Daten in Bezug auf Käufe identifizierter Kunden an diesem Tag in der KARTEN-Datei (16) gespeichert werden.

31. Verfahren nach Anspruch 23 und 25 und einem der Ansprüche 21 bis 30, **dadurch gekennzeichnet, dass** für jeden Markentyp die Informationen in Bezug auf getätigte Warenkäufe mit den Zuteilungsbedingungen des/der Datei(en) KRITERIEN/TICKET (13) verglichen und danach für jeden Markentyp die eventuell bei der Begleichung registrierten Informationen in Bezug auf die Identität des Kunden mit den Informationen in Bezug auf die Identität des/der Kunden in der/den Datei(en) KRITERIEN/KUNDEN (14) verglichen werden, und dann, wenn eine gemäß den Zuteilungsbedingungen einer KRITERIEN/KUNDEN-Datei (14) zugeteilte Marke vom selben Typ ist wie eine Marke, die gemäß den Zuteilungsbedingungen einer KRITERIEN/TICKET-Datei (13) zugeteilt wurde, die entsprechenden kommerziellen Rabattwerte zum Errechnen des Gesamtwertes der Marke vor deren Ausgabe addiert werden.

32. Verfahren nach einem der Ansprüche 21 bis 31, **dadurch gekennzeichnet, dass** zur Ausgabe einer Marke, wenn jede Kasse (3) mit einem Kassenscheindrucker ausgestattet ist, diese auf einem Drucker ausgedruckt wird, der ausgewählt wird aus: dem Kassenscheindrucker, wobei die Marke im Anschluss an den Kassenschein ohne Abtrennen der Marke vom Kassenschein ausgedruckt wird; einem Kassenscheindrucker, bei dem die Marke hinter dem Kassenschein ausgedruckt wird, wobei Marke und Kassenschein voneinander getrennt sind; mit einem anderen Drucker als dem Kassenscheindrucker, der sich jedoch an der entsprechenden Kasse (3) befindet.

33. Verfahren nach einem der Ansprüche 21 bis 32, **dadurch gekennzeichnet, dass** zum Erstellen und Ausgeben einer dem Kunden zugeteilten Marke:
- anhand der Informationen in den Dateien MARKENTYPEN (12) und KRITERIEN (13, 14) Daten erstellt werden, die einen Text mit dem kommerziellen Rabattwert der Marke repräsentieren,
- diese Daten mit einem Drucker ausgedruckt werden, der sich an der Kasse (3) befindet,
- eine Datei aktualisiert wird, die die ausgegebenen Marken zählt.
